# EUROPEAN PATENT SPECIFICATION

(11) **EP 2 793 561 B1**
(45) Date of publication and mention of the grant of the patent: **01.02.2017**
(21) Application number: 12820982.2
(22) Date of filing: 21.12.2012
(51) Int. Cl.: A01J 9/04, F25D 31/00, B65D 88/74, A23C 3/04

(54) **BULK FLUID REFRIGERATION AND HEATING**
MASSENKÜHLUNG UND -ERHITZUNG VON FLÜSSIGKEITEN
RÉFRIGÉRATION ET CHAUFFAGE DE LIQUIDE EN VRAC

(30) Priority: 22.12.2011 US 201161579257 P; 23.12.2011 GB 201122410
(43) Date of publication of application: 29.10.2014
(73) Proprietor: DeLaval Holding AB, 147 21 Tumba (SE)
(72) Inventor: MEILLAN, Jean-Pierre, PL-50-117 Wroclaw (PL)
(74) Representative: Lilliehorn, Tobias
(86) International application number: PCT/SE2012/051471
(87) International publication number: WO 2013/095292

(56) References cited:
- EP-A1- 1 094 285
- EP-A1- 1 094 285
- WO-A1-02/74069
- WO-A1-02/074069
- WO-A2-2006/019553
- US-A- 4 423 603
- PRINTSYP DEYSTVIYA CHETYREKHKHODOVOGO KLAPANA, [Online] 04 January 2011, Retrieved from the Internet: <URL:http://www.xiron.ru/content/view/30794 /173/> [retrieved on 2014-03-05]

## Description

The present invention relates to the refrigeration and heating of bulk fluids and in particular, but not exclusively, to the refrigeration and heating of bulk milk freshly obtained from dairy animals such as cows.

It is well understood by dairy farmers and dairies that milk freshly obtained from a dairy animal should be refrigerated as soon as possible in order to maximise the shelf life of the milk product. Typically, milk freshly obtained from a dairy animal must be cooled from a temperature of +35°C down to below +4°C within a specified cooling time of generally between two hours and three and a half hours. There are a number of standards regulating the bulk refrigeration of dairy milk and specifying refrigeration requirements. One such standard is "EN 13732+A2:2009; Food processing machinery-Bulk milk coolers on farms - Requirements for construction, performance, suitability for use, safety and hygiene". However, generally, milk freshly obtained from a dairy animal (i.e. obtained within a previous two hour period) is typically cooled and maintained at a temperature below +4°C in a refrigerated bulk milk tank. As defined in the aforementioned standard, and for the purposes of the present patent specification, a refrigerated bulk milk tank is to be understood as being equipment for the refrigeration and bulk storage of refrigerated raw milk freshly milked (i.e. milk which is less than two hours old after having been milked).

Systems for refrigerating bulk fluid may include multiple valves for connecting and disconnecting complicated fluid circuitry in fluid communication with various heat exchangers in the refrigeration system.

Such systems may use multiple single or three-way valves plus additional lines of fluid circuitry in order for various heat transfer arrangements within the system to be utilised. Each valve in the system is individually controllable to move between its on/off configurations. This can be achieved by an electronic control system, however, the greater the number of valves in the system, the more complex control software required to operate them. Additionally, each valve utilised creates potential points of failure within the system. Furthermore, the greater the number of valves used, the more space required within the system to accommodate them and the more lines of fluid circuitry required in order to connect them to the main fluid circuits in the system.

EP1094285 A1 discloses a heat pump apparatus comprising a refrigerant circuit with two independent loops, refrigeration means (compressor, heat exchanger(s), expansion means), a heat storage tank container water as the bulk medium to be heated/cooled and a four-way valve switching the refrigerant loops between a "heating" and a "cooling" mode position.

WO 02/074069 A1 discloses a method for cooling milk in a milk storage tank of an automatic milking system.

US4,423,603A discloses a heat pump type refrigeration system for air conditioners having a compressor the suctions side and discharge side of which are switchably connected to an indoor heat exchanger and an outdoor heat exchanger through a four-way valve.

The present invention has been made, at least in part, in consideration of the problems and drawbacks of such systems.

It is an object of the present invention to provide a refrigeration bulk fluid tank having a relatively simplified and efficient valve and fluid circuit arrangement for selectively connecting and disconnecting fluid circuits in a refrigerated bulk fluid tank system in order to refrigerate or heat fluid stored in the tank as required.

According to the present invention, there is provided an apparatus comprising: a refrigerated bulk fluid tank; refrigeration means for selectively refrigerating or heating fluid stored in said tank; and at least one four-way valve in fluid communication with said refrigeration means wherein said four-way valve comprises: a first port, second port, third port, and fourth port; and a valve member movable between a first position and a second position wherein, in said first position, fluid is flowable along a first flow path between said first port and said second port and along a second flow path between said third port and said fourth port, and wherein, in said second position, fluid is flowable along a third flow path between said first port and said forth port and along a fourth flow path between said third port and said second port, characterized in that the apparatus also comprises first thermal communication means for transporting heat between fluid stored in said tank and said refrigeration means, having a first closed loop fluid circuit extending between said tank and said refrigeration means, a first part of said first circuit being part of a first heat exchanger providing thermal communication between fluid stored in said tank and fluid in said first fluid circuit; and a second thermal communication means for transporting heat between said refrigeration means and from ambient fluid, having a second closed loop fluid circuit extending from said refrigeration means, a first part of said second circuit being part of a second heat exchanger providing thermal communication between ambient fluid and fluid in said second fluid circuit.

Use of at least one four-way valve in a refrigerated bulk fluid tank system substantially reduces the number of valves required in the system for heating and refrigerating of fluids stored in the tank. It also removes the need for additional circuitry which would be required for systems having multiple single or three-way valves as known in the art.

In a first embodiment, the apparatus may comprise first and second four-way valves in fluid communication with the refrigeration means. The valves may be fluidly connected in the apparatus to provide (i) cooling of fluid in the tank by means of the refrigeration means when the valve members of the valves are in the first position, and (ii) reverse-cycle heating of fluid in the tank when the valve members of the valves are in the second position.

In this arrangement, the two four-way valves permit thermal fluid communication with the tank in a way which selectively allows a standard cooling cycle to operate for cooling fluid in the tank, or allows a reverse heating cycle to operate for heating fluid in the tank for purposes such as cleaning of the tank.

In a second embodiment, the apparatus may comprise one four-way valve fluidly connected in the apparatus such that when the valve member of the four-way valve is in the first position, fluid in the tank is cooled by means of the refrigeration means, and when the valve member of the four-way valve is in the second position, fluid in the tank is cooled by means of ambient fluid.

In this arrangement, the four-way valve permits thermal fluid communication with the tank in a way which selectively allows a standard cooling cycle to operate by means of the refrigeration means for cooling fluid in the tank, or allows cooling of fluid in the tank by means of ambient fluid, instead of the refrigeration means.

The apparatus comprises first thermal communication means for transporting heat between fluid stored in the tank and the refrigeration means. The first thermal communication means has a first closed loop fluid circuit extending between the tank and the refrigeration means, a first part of the first circuit is part of a first heat exchanger providing thermal communication between fluid stored in the tank and fluid in the first fluid circuit. The apparatus also comprises second thermal communication means for transporting heat between the refrigeration means and ambient fluid, having a second closed loop fluid circuit extending from the refrigeration means, a first part of the second circuit being part of a second heat exchanger providing thermal communication between ambient fluid and fluid in the second fluid circuit.

With regard to the first embodiment, the apparatus preferably includes first and second four-way valves in fluid communication with the first and second closed loop fluid circuits such that when the valve members of the valves are in the first position, heat is transferable from the fluid in the tank to the ambient fluid by means of the refrigeration means, and when the valve members are in the second position, heat is transferable from the ambient fluid to the fluid in the tank by means of the refrigeration means.

Furthermore, when the valve member of the first and second four-way valves are in the first position the fluid in the first fluid circuit may flow from the first part of the circuit through the first four-way valve by means of the first flow path, through the refrigeration means, through the second valve by means of the first flow path and back to the first part of the circuit such that heat from fluid in the tank is transferable to the refrigeration means. Additionally, in this embodiment the fluid in the second fluid circuit may flow from the first part of the second circuit through the first four-way valve by means of the second flow path, through the refrigeration means, through the second valve by means of the second flow path and back to the first part of the circuit such that the heat from the refrigeration means is transferable to the ambient fluid.

More preferably, when the valve members of the first and second four-way valves are in the second position the fluid in the first fluid circuit may flow from the first part of the first circuit, through the first four-way valve by means of the third flow path, through the refrigeration means, though the second valve by means of the fourth flow path and back to the first part of the first circuit such that heat from the refrigeration means is transferable to fluid in the tank; and the fluid in the second fluid circuit may flow from the first part of the second circuit through the first four-way valve by means of the fourth flow path, through the refrigeration means, through the second valve by means of the third flow path and back to the first part of the second circuit such that the heat from the ambient fluid is transferable to the refrigeration means.

With regard to the second embodiment, when the valve member of the four-way valve in the first position this may provide thermal communication between the tank and the refrigeration means, as well as thermal communication between the refrigeration means and the ambient fluid. When the valve member is in the second position, the valve may selectively disconnect substantial thermal communication between the tank and the refrigeration means, as well as disconnecting thermal communication between the refrigeration means and the ambient fluid. When the valve member is in the second position, the valve may establish thermal communication between the tank and the ambient fluid.

Additionally, when the valve member is in the second position, the four-way valve may place the first and second fluid circuits in fluid communication with one another so as to provide a single closed loop circuit comprising the first part of the first circuit and the first part of the second circuit.

Preferably, when the valve member of the four-way valve is in the first position, the fluid in the first fluid circuit may flow from the first part of the first circuit through the four-way valve by means of the first flow path, through the refrigeration means and back to the first part of the first circuit such that heat from fluid in the tank is transferable to the refrigeration means, while fluid in the second fluid circuit may flow from the first part of the second circuit through the four-way valve by means of the second flow path, through the refrigeration means and back to the first part of the second circuit such that the heat from the refrigeration means is transferable to the ambient fluid.

More preferably, when the valve member of the four-way valve is in the second position the fluid in the first fluid circuit is flowable from the first part of the first circuit through the four-way valve by means of the third flow path, through the refrigeration means, through the first part of the second circuit, through the four-way valve by means of the fourth flow path, though the refrigeration means, and back to the first part of the first circuit such that a single closed looped circuit is defined and the heat from fluid in the tank is transferable to the ambient fluid.

In both embodiments, a second part of the first circuit may be part of a third heat exchanger providing thermal communication between fluid in the first fluid circuit and the refrigeration means and a second part of the second circuit may be part of a fourth heat exchanger providing thermal communication between fluid in the second fluid circuit and the refrigeration means.

The apparatus may also include fluid displacement means for moving ambient fluid through the second heat exchanger, wherein the ambient fluid is preferably air and the fluid displacement means is preferably a fan.

Additionally, the or each closed loop fluid circuit may comprise a pump for pumping fluid through the or each closed loop fluid circuit. The fluid in the or each closed loop fluid circuit is preferably water, and preferably the water is mixed with an anti-freezing agent.

The refrigeration means may be magnetic refrigeration means comprising a magnetic heat pump. The magnetic refrigeration means may operate under automatic control and may comprise at least two magnetocaloric members.

Preferably, the magnetic refrigeration means comprises two or more magnetocaloric members having different Curie points, each Curie point being between substantially minus 10 degrees Celsius and substantially plus 70 degrees Celsius and preferably being between minus 4 degrees Celsius and plus 57 degrees Celsius.

More preferably, the magnetic refrigeration means comprises magnetocaloric members having different Curie points, the Curie points being minus 4 degrees Celsius, plus 4 degrees Celsius, plus 10 degrees Celsius, plus 17 degrees Celsius, plus 24 degrees Celsius, plus 34 degrees Celsius, plus 42 degrees Celsius, and plus 57 degrees Celsius., and preferably wherein the magnetocaloric members are manufactured from one of (i) Gadolinium alloys; (ii) La Fe Co Si alloys; and (iii) Mn Fe P As alloys.

The magnetic refrigeration means may also comprise two or more magnetocaloric members (7) having an entropy variation produced by a change in magnetic field of 0.5 tesla which is greater than substantially 0.8 J/kg.K across the entirety of different temperature ranges, the temperature range of each magnetocaloric member being within the range of substantially minus 15 degrees Celsius and substantially plus 80 Celsius and preferably within the range of substantially minus 10 degrees Celsius and substantially plus 75 degrees Celsius, and further preferably wherein the temperature range of one the magnetocaloric members has a lower temperature of substantially minus 15 degrees Celsius and the temperature range of another one of the magnetocaloric members has an upper temperature of substantially plus 80 degrees Celsius.

The apparatus may further comprise means for milking an animal, such as a cow and means for transporting milk, obtained from an animal by the milking means, from the milking means to the refrigerated bulk milk tank. The means for milking an animal may operate under automatic control. Preferably, the means for milking an animal is robotic milking means.

The means for transporting milk may comprise one or more pipes through which the refrigerated bulk milk tank fluidly communicates with the means for milking an animal.

Preferably, the refrigerated bulk fluid tank is a refrigerated bulk milk tank.

Ideally, the valve member of the four-way valve is made of a thermal insulating material. Preferably, the valve member of the four-way valve is made of a solid portion of thermal insulating material through which spaced fluid flow paths extend.

Also, a method of refrigerating using any of the apparatus of the appended apparatus claims or any of the apparatus recited herein may be provided.

One aspect of the present invention provides a four-way valve comprising a first port (89), second port (90), third port (91), and fourth port (92); and a valve member (93) movable between a first position and a second position wherein, in said first position, fluid is flowable along a first flow path (94) between said first port (89) and said second port (90) and along a second flow path (95) between said third port (91) and said fourth port (92), and wherein, in said second position, fluid is flowable along a third flow path (96) between said first port (89) and said forth port (92) and along a fourth flow path (97) between said third port (91) and said second port (90); wherein the valve member is made of a thermal insulating material.

Specific embodiments will now be described, by way of example only, with reference to the accompanying drawings in which:
Figure 1 is a schematic view of an animal milking installation according to the present invention, the installation having an animal milking stall provided with an automatic milking robot for attaching teat cups to animal teats, a refrigerated bulk milk tank, and pipes connecting the teat cups to the milk tank;
Figure 2a is a schematic hydraulic diagram of a refrigerated bulk milk tank according to the invention arranged with a magnetic heat pump so as to allow for operation in cold ambient conditions without use of the magnetic heat pump (i.e. natural cooling), wherein heat exchangers which operate to transfer heat to and from the heat pump are utilised and wherein a four-way valve is in a first configuration;
Figure 2b is a schematic hydraulic diagram of the apparatus shown in Figure 2a wherein the four-way valve is in a second configuration;
Figure 3a is a schematic hydraulic diagram of the apparatus shown in Figure 2a modified so as to allow a pre-cooling and/or instant cooling of fresh milk entering the tank with the four-way valve in the first configuration;
Figure 3b is a schematic hydraulic diagram of the apparatus shown in Figure 3 a with the four-way valve in the second configuration;
Figure 4a is a schematic hydraulic diagram of the apparatus shown in Figure 3a modified so as to have two four-way valves to allow reversal of the refrigeration cycle and thereby allow the tank, or the tank inlet pipe(s), to be heated for cleaning or other purposes, the four-way valves being shown in their first configurations;
Figure 4b is a schematic hydraulic diagram of the apparatus shown in Figure 4a with the four-way valves in their second configurations;
Figure 5a is a schematic hydraulic diagram of the embodiment shown in Figure 4a modified so as to include a heat exchanger operating as a boiler in series with an ambient heat exchanger;
Figure 5b is a schematic hydraulic diagram of the embodiment shown in Figure 4b modified so as to include a heat exchanger operating as a boiler in series with an ambient heat exchanger;
Figure 6 is a schematic hydraulic diagram of the embodiment shown in Figure 5a modified so as to include a heat exchanger operating as a boiler in parallel with the ambient heat exchanger;
Figure 7 is a schematic hydraulic diagram of the apparatus shown in Figure 4a modified so as to have two four-way valves, showing one four-way valve in the second configuration and one in the first configuration so as to allow for operation in cold ambient conditions without use of the magnetic heat pump (i.e. natural cooling);
Figure 8a is an enlarged schematic diagram of the four-way valve shown in the above figures in the first configuration;
Figure 8b is an enlarged schematic diagram of the four-way valve shown in the above figures in the second configuration;
Figure 8c is an enlarged schematic diagram of an alternative four-way valve, in the first configuration, for use as shown in the above figures;
Figure 8d is an enlarged schematic diagram of an alternative four-way valve, in the second configuration, for use as shown in the above figures; and
Figure 9 is a graph showing how entropy variation of specified magnetocaloric materials varies with temperature when said materials are exposed to a variation in magnetic field of 1.6 T (tesla).

Whilst the invention is susceptible to various modifications and alternative forms, specific embodiments are shown by way of example in the drawings and are herein described in detail. It should be understood, however, that drawings and detailed description thereto are not intended to limit the invention to the particular form disclosed, but on the contrary, the invention is to cover all modifications, equivalents and alternatives falling within the spirit and scope of the present invention as defined by the appended claims.

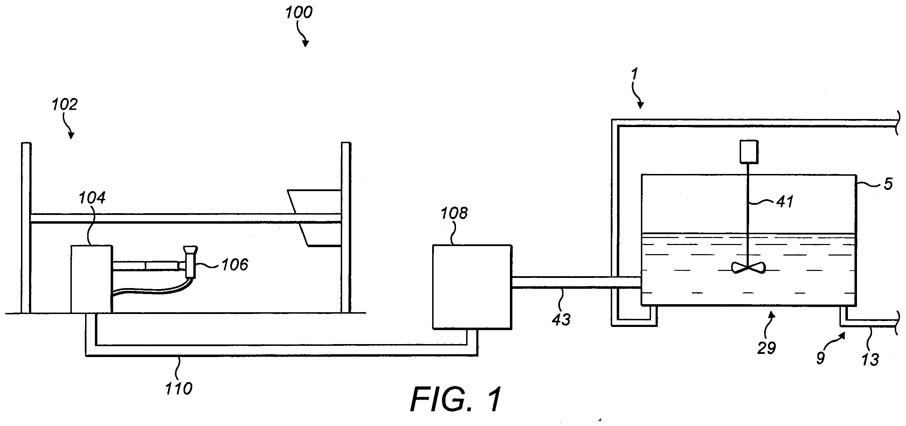

Referring to the drawings, apparatus 1 according to the present invention is provided in the installation 100 shown in Figure 1. The apparatus 1 comprises a refrigerated bulk milk tank 5 and together with associated equipment for refrigerating milk contained within the tank 5 as further described below.

It is to be understood that whilst the apparatus shown in the accompanying drawings are principally described with reference to milk which is received in the tank 5, the apparatus may nevertheless be used to store, refrigerate and/or heat other fluids instead of milk. These other fluids include (i) a mixture of milk and one or more fermenting agents, (ii) a cleaning fluid, (iii) water and (iv) air.

The installation 100, as shown in Figure 1, includes an animal milking stall 102 provided with an automatic milking robot 104 for attaching teat cups 106 to animal teats. The teat cups 106 (only one of which is shown in Figure 1) are fluidly connected to vacuum milking equipment 108 known in the art by means of pipes 110 known in the art. The vacuum milking equipment 108 is itself fluidly connected to the refrigerated bulk milk tank 5 of the apparatus 1 by means of tank inlet pipe(s) 43. Accordingly, in the installation 100 shown in Figure 1, milk is obtained automatically (i.e. without human intervention) from an animal and may be automatically (i.e. without human intervention) transported directly from the animal into the refrigerated bulk milk tank 5. It is to be understood however that the present invention is not limited to apparatus connected to milking equipment.

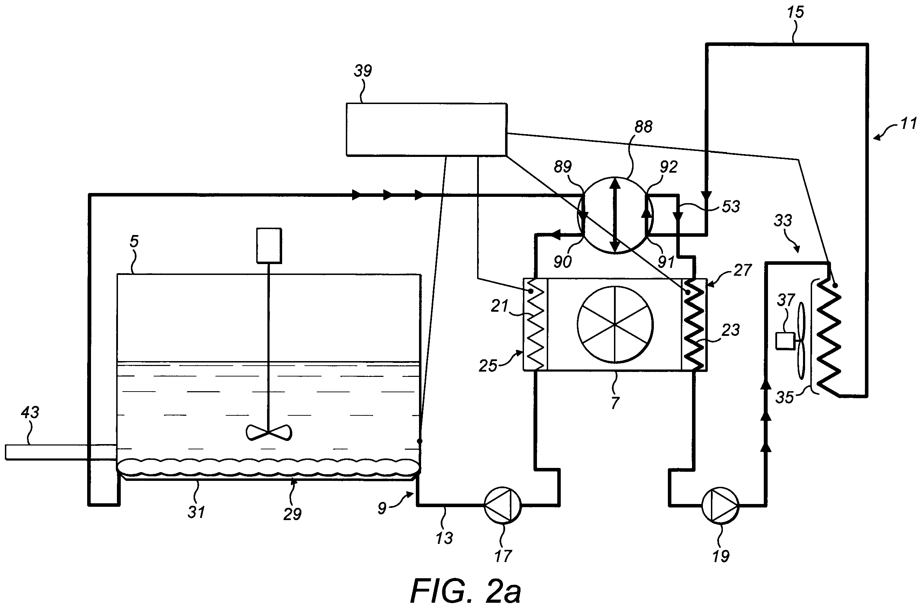

As shown in Figures 2a to 7, the associated equipment for refrigerating milk includes refrigeration means 7 in the form of a magnetic heat pump and first and second thermal communication means 9,11 associated with the magnetic heat pump 7.

Although a magnetic heat pump is depicted in the figures showing embodiments of the invention, those skilled in the art will appreciate that any form of refrigeration means capable of refrigerating or heating fluid stored in tank 5 and connectable to at least one four-way valve could be utilised in embodiments of the invention, for example, refrigerant gas cooling systems.

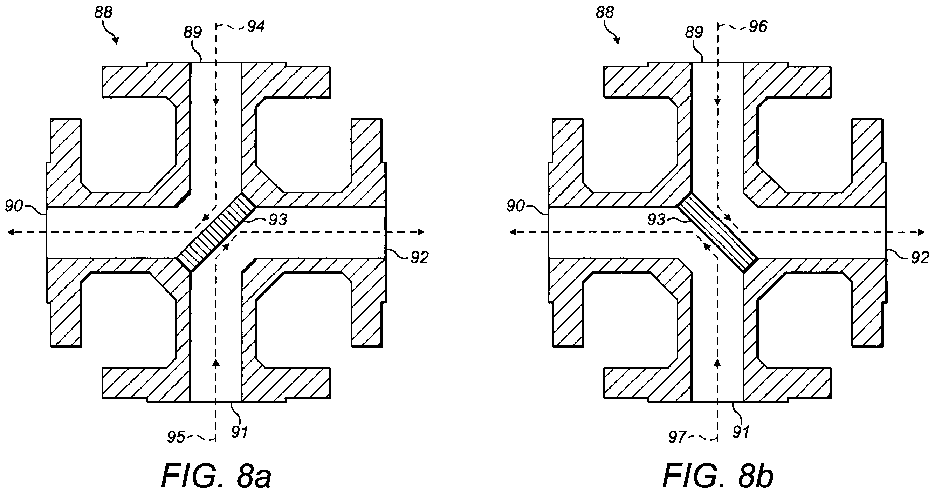

The apparatus also includes at least one four-way valve 88, as best shown in Figures 8a and 8b.

The four-way valve 88 comprises a first 89, second 90, third 91, and fourth port 92, and a valve member 93. The valve member 93 is movable between a first position and a second position. In the first position, as shown in Figure 8a, fluid is flowable along a first flow path 94 between the first port 89 and the second port 90 and along a second flow path 95 between the third port 91 and the fourth port 92. In the second position, as shown in Figure 8b, fluid is flowable along a third flow path 96 between the first port 89 and the fourth port 92 and along a fourth flow path 97 between the third port 91 and the second port 90.

The four-way valve 88 is manufactured so as to ensure that the separate flow paths through the valve are thermally insulated from one another. This in turn is to ensure that the transfer of heat from one flow path to another is minimised. The thermal insulation is provided between flow paths by manufacturing the valve 88 from thermally insulating material. The valve member 93 in particular may be coated with or made from a thermally insulating material. The body of the valve 88, in which the valve member 93 is mounted and which in combination with the valve member 93 defines the flow paths, is ideally manufactured from or coated with thermally insulating material.

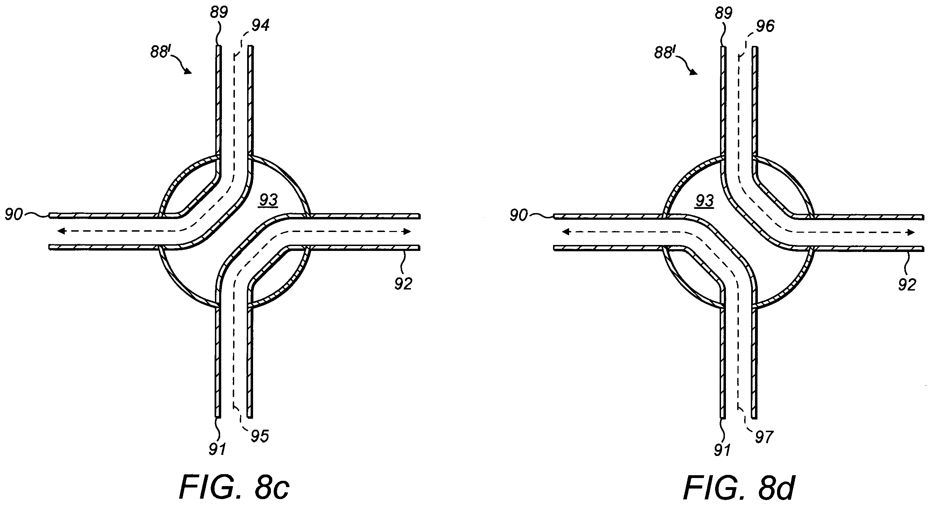

The thermal insulation between flow paths is improved by increasing the insulated spacing between the flow paths within the valve. The alternative four-way valve 88' shown in Figures 8c and 8d has such an increased spacing when compared to the valve 88 of Figures 8a and 8b. In the alternative valve 88', the thickness of the valve member 93 is effectively greater than that of the valve member 93 in the valve 88 of Figures 8a and 8b. Specifically, the valve member 93 in the alternative valve 88' is formed as a solid cylinder of thermal insulating material with spaced flow paths extending therethrough for fluid communication with the four ports 89,90,91,92.

The valve member 93 of the alternative valve 88' is movable between a first position and a second position. In the first position, as shown in Figure 8c, fluid is flowable along a first flow path 94 between the first port 89 and the second port 90 and along a second flow path 95 between the third port 91 and the fourth port 92. In the second position, as shown in Figure 8d, fluid is flowable along a third flow path 96 between the first port 89 and the fourth port 92 and along a fourth flow path 97 between the third port 91 and the second port 90.

The alternative valve 88' may be used as the four-way valve in any of the arrangements described herein.

As will be discussed in greater detail below, the first thermal communication means 9 generally operates to transport heat from milk stored in the tank 5 to the magnetic heat pump 7. Conversely, the second thermal communication means 11 generally operates to transport heat from the magnetic heat pump 7.

The first and second thermal communication means 9,11 include a number of components. Firstly, the first and second thermal communication means 9,11 respectively include first and second closed loop fluid circuits 13,15 through which a heat transporting fluid may pass during use. The fluid in each circuit 13,15 may be of the same type and is ideally water. More preferably, the fluid is water mixed with an anti-freezing agent, such as mono propylene glycol (or any other anti-freezing agent approved for use in the food industry). The two circuits 13,15 may be isolated from one another, however, a benefit of using a common type of fluid in these circuits is that the circuits can be connected to beneficial effect during certain operations as will be evident from the arrangements shown in Figures 2a to 7 of the accompanying drawings.

Each circuit 13,15 is provided with a pump 17,19 for pumping fluid around the respective circuit 13,15. Each pump 17,19 is driven by a motor (not shown). A separate motor is provided for driving each of the two pumps 17,19 and, accordingly, each pump 17,19 is driven by its own motor. However, in an alternative embodiment, the two pumps 17,19 are driven by a single motor common to both pumps 17,19. In this alternative embodiment, the two pumps 17,19 are both driven at the same time, however means may be provided for selectively disengaging one or the other of the pumps 17,19 from the motor to thereby allow independent operation of the pumps 17,19 despite the use of only one motor. Such a disengagement of the motor drive may be achieved through use of a clutch arrangement (not shown) as will be understood by those skilled in the art.

Each of the thermal communication means 9,11 further includes two heat exchangers. One heat exchanger 25,27 of each thermal communication means 9,11 operates to transfer heat between magnetocaloric members (not shown) of the magnetic heat pump 7 and the fluid in the respective circuits 13,15 of the thermal communication means 9,11. Parts 21,23 of the first and second fluid circuits 13,15 respectively forming the heat exchangers 25,27 of the magnetic heat pump 7 are merely shown schematically in the accompanying drawings. The operation of such heat exchangers in a magnetic heat pump will be well understood by those skilled in the field of magnetic refrigeration, however, a brief discussion in this regard is provided below.

For the purposes of clarity and aiding the understanding of how the apparatus 1 shown in Figure 2a operates, reference will now be made to the magnetic refrigeration cycle of the magnetic heat pump 7. As will be understood by those familiar with magnetic refrigeration, a magnetic heat pump comprises magnetocaloric material which has the characteristic effect of undergoing a reversible change in temperature when exposed to a changing magnetic field. Specifically, a decrease in the strength of an externally applied magnetic field results in the temperature of the material dropping. Conversely, if a magnetic field is applied to a magnetocaloric material (or the strength of such a field is increased), then the temperature of the material increases. However, this effect only takes place for a given magnetocaloric material for a given temperature range specific to that material. Only in relatively recent years have magnetocaloric materials become operable at room temperatures, but typically with limited operating temperature ranges. In order to ensure the magnetic heat pump 7 has a sufficiently broad overall temperature operating range, a number of different types of magnetocaloric material are provided in the heat pump. Which of these different types of material operates at any one time as described above depends upon ambient conditions (for example, the temperature of the milk). By way of example, and as discussed in greater detail below, the heat pump 7 may comprise one or more of the following magnetocaloric materials: (i) Gadolinium and Gadolinium-Terbium alloys; (ii) Mn Fe P As alloys; and (iii) La(Fe,Co,Si)13 alloys. The heat pump 7 may comprise a plurality of magnetocaloric members wherein each magnetocaloric member comprises one of said magnetocaloric materials.

Many developments relating to magnetocaloric materials (operable at room temperature) are currently being made by various laboratories around the World. As suggested above, the heat pump 7 of the apparatus described herein can be constructed using various different types of magnetocaloric materials - such as Gadolinium and Gadolinium-Terbium alloys, or Mn Fe P As alloys (as, for example, produced in a method described in WO 2009/133048 A1, or La(Fe,Co,Si)13 alloys (as produced in a method particularly described in WO 2010/038099 A1, WO 2009/090442 A1, and WO 2010/038098A1 ).

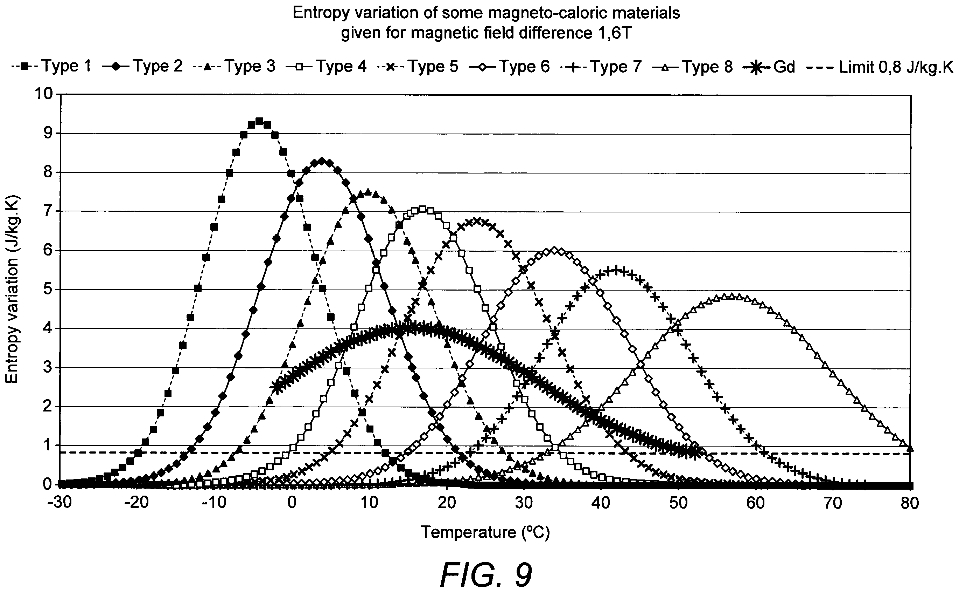

As is shown in Figure 14 of the accompanying drawings, magnetocaloric materials may be characterised by their Curie points. The curved line denoted by the letters "Gd" in Figure 9 shows how entropy variation (in Joules per kilogramme Kelvin, i.e. in J/kg.K) of Gadolinium, produced by a change in magnetic field of 1.6 tesla, varies with temperature. The Curie point of Gadolinium (the maximum value on the curve) is close to 16°C (which corresponds to an entropy variation of almost 4 J/kg.K). As will be evident from Figure 9, Gadolinium exhibits a magnetocaloric effect over a relatively broad temperature range (from 0°C to between 30°C and 40°C) and may be used in embodiments of the present invention. In contrast to Gadolinium, La(Fe,Co,Si)13 alloys have a relatively high entropy variation for a given temperature, but exhibit a magnetocaloric effect in a narrower temperature range (in particular, see La(Fe,Co,Si)13 - Type 4 below). Magnetocaloric materials exhibiting a magnetocaloric effect across a wide range of temperatures are of particular use in the system described herein.

In particularly preferred embodiments of the present invention, the heat pump 7 mentioned herein comprises eight types of La(Fe,Co,Si)13 alloy. These eight types of alloy have different Curie points and overlapping temperature ranges in which they exhibit a magnetocaloric effect, and they are commercially available to order. They are produced in accordance with WO 2010/038099 A1. Their specification is listed below and they display a variation of entropy.
Type 1 has its Curie point at -4°C, and mainly exhibits its magnetocaloric effect between -12°C and +5°C
Type 2 has its Curie point at +4°C, and mainly exhibits its magnetocaloric effect between -5°C and +15°C
Type 3 has its Curie point at +10°C, and mainly exhibits its magnetocaloric effect between -2°C and +23°C
Type 4 has its Curie point at +17°C, and mainly exhibits its magnetocaloric effect between +5°C and +28°C
Type 5 has its Curie point at +24°C, and mainly exhibits its magnetocaloric effect between +12°C and +35°C
Type 6 has its Curie point at +34°C, and mainly exhibits its magnetocaloric effect between +23°C and +46°C
Type 7 has its Curie point at +42°C, and mainly exhibits its magnetocaloric effect between +32°C and +52°C
Type 8 has its Curie point at +57°C, and mainly exhibits its magnetocaloric effect between +45°C and +67°C

For milk cooling applications, it is important to provide a selection of magnetocaloric materials exhibiting a magnetocaloric effect in a temperature range similar to that mentioned above.

With reference to Figure 9, it will be seen that the magnetocaloric effect exhibited by each of the magnetocaloric materials represented in Figure 9 is such that each material has a change in entropy (which is produced by a change in magnetic field of 1.6 tesla) which is greater than substantially 0.8 J/kg.K across a range of temperatures, where said temperature range is between substantially minus 15 degrees Celsius and substantially plus 80 Celsius and preferably between substantially minus 10 degrees Celsius and substantially plus 75 degrees Celsius. Preferably, said temperature range of one (Type 1) of the magnetocaloric materials has a lower temperature of substantially minus 15 degrees Celsius and said temperature range of another one (Type 8) of the magnetocaloric materials has an upper temperature of substantially plus 80 degrees Celsius.

The aforementioned change in entropy (which is produced by a change in magnetic field of 1.6 tesla) may be greater than substantially 2.0 J/kg.K across a range of temperatures. In this case, said temperature range is between substantially minus 15 degrees Celsius and substantially plus 70 degrees Celsius. Preferably, said temperature range of one (Type 1) of the magnetocaloric materials has a lower temperature of substantially minus 15 degrees Celsius and said temperature range of another one (Type 8) of the magnetocaloric materials has an upper temperature of substantially plus 70 degrees Celsius.

More specifically, the materials should not exhibit a magnetocaloric effect at too low a temperature, for example below -15°C (or perhaps no less than -20°C), because there would then be a risk of the heat transfer liquid circulating in the first fluid circuit 13 being at too low a temperature, which could lead to the milk in the tank 5 freezing on the surface of the heat exchanger 29. Conversely, regarding the high end of the temperature operating range, the materials should exhibit a magnetocaloric effect above the highest ambient temperature where the apparatus will be operated, plus some temperature difference for achieving the heat exchange in heat exchangers 33,27. The Type 8 material specified above will be adequate for this purpose in the context of bulk milk tank cooling, allowing operation at least up to approximately 45°C ambient temperature.

Alternative magnetocaloric materials may be used which exhibit a magnetocaloric effect substantially the same as, or similar to, that shown in Figure 9 and as described above, but for a different change in magnetic field, for example, for a smaller change in magnetic field. For example, the change in magnetic field may be 0.5 tesla.

The materials specified above would also allow the heat pump 7 to prepare hot water up to around 55°C to 60°C (see the below description relating to Figures 10 and 11). Nevertheless, it is still further possible to select other types of magnetocaloric material which operate at slightly higher temperatures, for example with Curie points up to 70°C or 80°C, in order to prepare even warmer hot water for the needs of a farm. Again, these materials are commercially available to the skilled person.

The material specifications of Types 1 to 8 above are given so as to provide specific examples of materials for use in the embodiments described herein. These materials are also ones actually used by the inventor in a working prototype. However, as will be understood by a person skilled in the art, another selection of materials could be made wherein the materials have different Curie points. In view of the above discussion, it will be understood that the temperature range in which the selection of materials exhibits a magnetocaloric effect should ideally be between-15°C and +90°C.

As discussed, the Curie points of the materials selected may be different to those mentioned above. The Curie points may be selected in dependence on the number of different types of magnetocaloric material used. The heat pump 7 has eight different types of magnetocaloric material, but this number could be changed, and this may influence the Curie points selected. The number of stages (see below) can also be varied, and the number of types of magnetocaloric material used in each stage can also be changed, and each of these variables can influence the selection of the Curie points.

With regard to the thermodynamic refrigeration cycle of the magnetic heat pump, this may be considered analogous to the Carnot cycle mentioned above. Rather than compressing a refrigerant gas so as to increase its temperature as in the Carnot cycle, a temperature increase in the magnetocaloric members (comprising magnetocaloric material) of the heat pump 7 is achieved by applying a magnetic field to said members. In a similar manner to the hot gaseous refrigerant being cooled and condensed in the Carnot cycle through exposure to ambient air, the magnetocaloric members of the heat pump 7 are cooled with ambient air by means of the second thermal communication means 11. Ideally therefore, the temperature of the magnetocaloric members is thereby reduced to that of an ambient temperature, whilst exposed to the magnetic field. In the analogous Carnot cycle, the cooled and condensed refrigerant is pumped into an expansion device and expanded, resulting in a rapid drop in temperature of the refrigerant. Conversely, in the magnetic heat pump 7, the magnetic field is removed from the magnetocaloric members which results in a drop in the temperature of said members. Heat in the milk held by the tank 5 may then be removed from said milk and absorbed by the magnetocaloric members through operation of the first thermal communication means 9. This last step is analogous to the pumping of the expanded and cooled refrigerant through the base/walls of the tank in the conventional Carnot cycle.

As alluded to above during the discussion of the first and second thermal communication means 9,11, it will be appreciated that the magnetocaloric members of the heat pump 7 exchange heat with the fluid in the first fluid circuit 13 and the second fluid circuit 15 by means of two heat exchangers 25, 27. The heat exchanger 27 of the second circuit 15 operates to reduce the temperature of the magnetocaloric members whilst said members are subjected to a magnetic field (or an increased magnetic field strength). Conversely, the heat exchanger 25 of the first fluid circuit 13 operates to increase the temperature of the magnetocaloric members once the magnetic field has been reduced or removed from said member. The first thermal communication means 9 may therefore be regarded as being located on the "cold side" of the magnetic heat pump 7, whilst the second thermal communication means 11 may be regarded as being located on the "warm side" of the magnetic heat pump 7.

Similarly, if any other form of refrigeration means 7 was utilised in the system, such as a refrigerant gas cooling system, then the first thermal communication means 9 would also be regarded as being located on the "cold side" of the refrigeration means, whilst the second thermal communication means 11 would be regarded as being on the "warm side" of the refrigeration means.

For the avoidance of doubt, it is to be understood that each of the heat exchangers 25,27 includes a fluid circuit which can retain fluid (a fluid heat carrier) for transferring heat between the magnetocaloric members and the fluid in the respective first and second fluid circuits 13,15. A heat pump suitable for use in the embodiments shown in Figures 2a to 7 may be provided in accordance with the teaching of International patent publication WO 2009/087310 A2. It will be appreciated therefore that the magnetic heat pump 7 comprises magnetic members providing a magnetic field (i.e. magnetic means 3 as mentioned in the aforementioned WO 2009/087310 A2) and magnetocaloric members (i.e. magnetocaloric elements 2 as mentioned in the aforementioned WO 2009/087310 A2) arranged as rotor and stator elements respectively so as to be moveable relative to one another upon rotation of the rotor by a motor. The magnetic members of the rotor are arranged to provide a number of magnetic fields (magnetic areas). In this way, magnetic fields may be repeatedly applied to and removed from the magnetocaloric members. It will also be appreciated that the rotary speed may be increased to increase the cooling capacity as necessary. Typically the rotary speed is 90RPM, with an operating range of between 60RPM and 120RPM.

According to the teaching of the aforementioned WO 2009/087310 A2 document, it will be further understood by those skilled in the art that a thermal mini-generator as described in said document comprises a magnetocaloric member/element together with an associated fluid heat carrier circuit (including at least one fluid driving piston 40 as mentioned in the aforementioned WO 2009/087310 A2) for carrying an internal fluid (i.e. a fluid internal to the heat pump) and thereby transporting heat to/from the magnetocaloric member/element, and that a number NR of these thermal mini-generators are arranged in a circle around a central axis and function in parallel. The number NR of mini-generators influences the power of the magnetic heat pump (a higher number NR provides more power).

An arrangement of thermal mini-generators about magnetic members moveable relative thereto may be regarded as a thermal stage (or thermal module 10,11,12,13 as mentioned in the aforementioned WO 2009/087310 A2) and it will be further understood that these stages may be stacked in series and that the number X of stacked stages influences the temperature range of the magnetic heat pump (a higher number X provides a bigger temperature span, and therefore a broader temperature range of operation between the lower possible operating temperature in the low temperature side and the higher possible operating temperature in the high temperature side).

In the context of the embodiments described herein, the heat pump 7 is provided with two thermal stages (i.e. X = 2), wherein each stage has thirty six thermal mini-generators (i.e. NR = 36) with magnetic members arranged to provide six magnetic fields. Each stage is arranged in one cylinder, with the first stage provided on the cold side of the magnetic heat pump 7, in contact with cold heat exchanger 25 of the heat pump, and the second stage provided on the warm side of the magnetic heat pump 7, in contact with hot heat exchanger 27 of the heat pump.

Furthermore, the heat pump 7 differs from that specifically described in the aforementioned WO 2009/087310 A2 document in that the magnetocaloric members/elements each comprise four different types of magnetocaloric material. These different types of material are arranged side-by-side in a stacked configuration. The types of magnetocaloric material provided in one stage are different to those provided in the other of the two stages, as is explained more fully below.

In the low temperature stage (i.e. the stage in contact with cold heat exchanger 25 of the heat pump), magnetocaloric materials of Type 1; Type 2; Type 3; and Type 4 (as shown Figure 9 and mentioned above) are stacked side-by-side.

As indicated above, the heat exchanger 25 comprises a fluid circuit (not shown) for transporting an internal fluid heat carrier, thereby providing thermal communication between the magnetocaloric material and the first fluid circuit 13. Driven by the pistons of the mini-generators of the first stage, the internal fluid heat carrier of the first stage of the magnetic heat pump 7 flows alternatively in opposite directions through the magnetocaloric materials of the first stage. The arrangement of magnetocaloric materials is such that, when the respective magnetocaloric members/elements are subjected to a magnetic field, the flow is in a first direction as follows:
- From a cold chamber associated with the cold heat exchanger 25,
- -> through the magnetocaloric material of Type 1,
- -> then through the magnetocaloric material of Type 2,
- -> then through the magnetocaloric material of Type 3,
- -> then through the magnetocaloric material of Type 4,
- -> then to a middle chamber located between the two stages.

When the respective magnetocaloric members/elements are not subjected to a magnetic field, the flow is in a second direction, opposite to the first direction:
- From the middle chamber
- -> through the magnetocaloric material of Type 4,
- -> then through the magnetocaloric material of Type 3,
- -> then through the magnetocaloric material of Type 2,
- -> then through the magnetocaloric material of Type 1,
- -> then to the cold chamber associated with the cold heat exchanger 25.

In the high temperature stage (i.e. the stage in contact with hot heat exchanger 27 of the heat pump), magnetocaloric materials of Type 5; Type 6; Type 7; and Type 8 (as shown Figure 9 and mentioned above) are stacked side-by-side.

As indicated above, the heat exchanger 27 comprises a fluid circuit (not shown) for transporting an internal fluid heat carrier, thereby providing thermal communication between the magnetocaloric material and the second fluid circuit 15. Driven by the pistons of the mini-generators of the second stage, the internal fluid heat carrier of the second stage of the magnetic heat pump 7 flows alternatively in opposite directions through the magnetocaloric materials of the second stage. The arrangement of magnetocaloric materials in the second stage is such that, when the respective magnetocaloric members/elements are subjected to a magnetic field, the flow is in a first direction as follows:
- From the middle chamber
- -> through the magnetocaloric material of Type 5,
- -> then through the magnetocaloric material of Type 6,
- -> then through the magnetocaloric material of Type 7,
- -> then through the magnetocaloric material of Type 8,
- -> then to the warm chamber associated with the hot heat exchanger 27.

When the respective magnetocaloric members/elements are not subjected to a magnetic field, the flow is in a second direction, opposite to the first direction:
- From the warm chamber associated with the hot heat exchanger 27,
- -> through the magnetocaloric material of Type 8,
- -> then through the magnetocaloric material of Type 7,
- -> then through the magnetocaloric material of Type 6,
- -> then through the magnetocaloric material of Type 5,
- -> then to the middle chamber.

This arrangement allows for sufficient power and temperature span to cool (i) the milk produced from one milking robot, without precooling, or (ii) the milk received in a 4 milkings tank of 1200 litres, without precooling (as according to standard EN13732)

It will be understood that the performance (e.g. cooling capacity) of the heat pump 7 may be varied by varying the number (NR) of mini-generators, number (X) of stages/modules, and/or the number of different types of magnetocaloric material stacked in a stage and the types of magnetocaloric material used. If power is increased in a modular way (i.e. by increasing the number of stages/modules), then several stages/modules (or, indeed, heat pumps 7) could be constructed together and optionally driven by the same motor.

Use of the refrigeration means in the form of a magnetic heat pump 7 in the context of the embodiments illustrated herein will now be described.

Firstly, a quantity of milk is loaded into the tank 5. The temperature of this milk will vary depending upon ambient temperature conditions, and, even without precooling, may be, for example, between 5°C and 25°C. The milk must be cooled to below 4°C, for example, to 3°C. The heat pump 7 is then initially started without the two fluid pumps 17,19 running. The magnetocaloric materials are thereby exposed to ambient temperature. There will be no external thermal exchange in the cold heat exchanger 25 or in the hot heat exchanger 27 of the heat pump 7.

After a short period of time (for example, after approximately 15 to 60 seconds), a number of cycles of the heat pump 7 will be completed. For example, with a 9 Hz heat pump having six magnetic areas in one revolution, and turning at 90rpm, five hundred and forty cycles (9x60 = 540 cycles) will be achieved after one minute. At this stage, the cold chamber associated with the cold heat exchanger 25 will be at a temperature close to the Curie point of the Type 1 magnetocaloric material (-4°C), and the warm chamber associated with the hot heat exchanger 27 will be at a temperature close to the Curie point of the Type 8 magnetocaloric material (+57).

The two fluid pumps 17,19 are then started. The liquid circulating in the first fluid circuit 13 will now be at a temperature between the temperature of the milk contained in the tank 5 and the temperature of the cold chamber, and so a heat exchange is possible.

The heat is transferred from the milk to the "cold liquid" circulating in a pipe arrangement of the first fluid circuit 13. This heat transfer may, for example, increase the temperature of the cold liquid from 0°C to 3°C. Then, in the cold heat exchanger 25,21 the heat originating from the milk is transferred to the internal liquid in the cold chamber of the magnetic heat pump 7, which is at a lower temperature, for example, minus 4°C to 0°C. When the magnetocaloric materials are subjected to the magnetic field, this heat is transferred from the cold chamber through to the Type 1 magnetocaloric material. The Type 1 magnetocaloric material is thereby heated to a temperature in the working range of the Type 2 magnetocaloric material and heat is transferred to the internal fluid in contact with the Type 2 magnetocaloric material. The same thermal transfer process then occurs in relation to the Type 3 and Type 4 magnetocaloric materials. Heat is then transferred to the middle chamber.

The pistons mix the internal fluid in the middle chamber between with the two stages, and the heat originating from the milk is further gradually transferred through the Type 5, 6, 7 and 8 magnetocaloric materials so as to produce progressively higher temperatures. This heat energy is finally transferred at a highest temperature (for example, of about 50°C) to the warm chamber.

This heat is then transferred through the heat exchangers 27/23 to fluid circulating at a lower temperature (of, for example, around 45°C) through the pipe arrangements of the second fluid circuit 15. The heat energy is finally transferred to the ambient air by means of the ambient heat exchanger 33 (which includes a fan 37 for blowing ambient air over a part 35 of the second fluid circuit 15).

Alternatively, as the warm fluid is cooled by the air in the ambient heat exchanger 35, it can be considered that all the fluids are cooled by the heat pump when the magnetocaloric materials are not subjected to a magnetic field, from the heat exchangers 23/27, to the warm chamber, through the Type 8, 7, 6 and 5 magnetocaloric materials and then through the middle chamber, and then through the Type 4, 3, 2 and 1 magnetocaloric materials and then to the cold chamber and then to the heat exchanger 25/21 and then cooling back the liquid circulating through the pipe arrangement 13, at a temperature lower than the milk temperature in tank 5, for cooling the milk through the heat exchanger 29.

The types of magnetocaloric material selected, especially in the low temperature range, is crucial in order to achieve effective cooling by having the cold liquid circulating at a temperature below the lowest required temperature of the milk in the tank, whilst nevertheless avoiding temperatures which are so low as to result in milk freezing at the surface of the cold heat exchanger 29 of the milk tank 5. The chosen Type 1 magnetocaloric material is a good compromise in this respect.

Compared to current refrigerant gas cooling systems, it is noticeable that the power/effectiveness of the magnetic heat pump will be drastically reduced below - 10°C to -15°C when the liquid is out of the operating range of the Type 1 magnetocaloric material, and this provides an effective safeguard for avoiding freezing of the milk on the tank heat exchanger 29.

The arrangement of Figure 2a shows use of a four-way valve in a first configuration. In this arrangement fluid in the first fluid circuit 13 is flowable through the valve 88 along a first flow path 94 between the first port 89 and the second port 90. Fluid in the second circuit 15 is also flowable through the valve 88 along a second flow path 95 between the third port 91 and the fourth port 92.

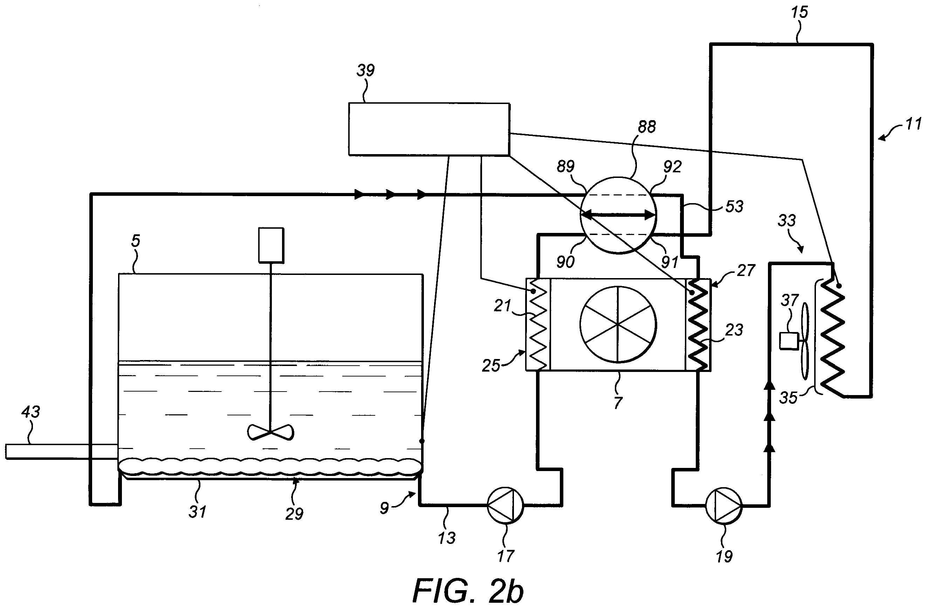

In contrast, Figure 2b shows use of the four-way valve 88 of Figure 2a in its second configuration. In this arrangement, fluid in the first fluid circuit 13 is flowable through the valve 88 along a third flow path 96 between the first port 89 and the fourth port 92. Fluid in the second circuit 15 is also flowable through the valve 88 along a fourth flow path 97 between the third port 91 and the second port 90.

The configuration of the valve in Figure 2b allows the first and second fluid circuits 13,15 to be selectively connected to one another to form a single closed loop circuit with the two heat exchangers 25,27 of the magnetic heat pump 7 forming part of the closed loop circuit.

The arrangement of Figure 2b allows milk in the tank 5 to be cooled using a combination of the tank heat exchanger 29 and the ambient heat exchanger 33 without use of the magnetic heat pump 7. This mode of operation is of particular use when milk and ambient temperatures are such that the magnetic heat pump is required to operate outside its temperature operating range. In these circumstances, the magnetic heat pump will fail to operate. Typically, this mode of operation may be used in response to the temperature of said ambient fluid becoming less than the temperature of the fluid stored in the tank (5) by a predetermined value. The predetermined value may be between 10°C to 15°C and may be 10°C (for example, when ambient temperature is approximately 5°C to 15°C and the temperature of milk in the tank is above 25°C). The mode of operation may revert to the original mode in response to the temperature of said ambient fluid becoming greater than the temperature of the fluid stored in said tank (5) by a predetermined value. The predetermined value may be between 10°C to 15°C and may be 10°C. The change between modes may be effected automatically (i.e. without human intervention) by means of the electronic control system 39.

A peculiarity of bulk milk cooling is that, after each time the tank is emptied and cleaned (every day, or every second or third day), fresh warm milk is introduced into the tank. Without precooling, this milk is introduced into the tank at a temperature of around 35°C. As a result, when starting the milk cooling, the milk in the tank will frequently be at a temperature from 25°C to 35°C.

As a consequence, liquid circulating in the first fluid circuit 13 and tank heat exchanger 29 of the first embodiment (see Figure 2a) can be at a temperature higher than the operating temperature ranges of magnetocaloric material Types 1, 2, 3 and 4. Starting the operation of the magnetic heat pump 7 can then be difficult in the cold side, even with the precautions for starting stated previously.

The same can happen on the warm side. For example, in winter, if the ambient heat exchanger 33 is located in an area where the temperature is below 10°C, then the liquid circulating through the second fluid circuit 15 can be at a temperature lower than the operating temperature ranges of magnetocaloric material Types 5, 6, 7 and 8, and then starting the operation of the magnetic heat pump 7 will be difficult in the warm side.

If both phenomena act at the same time, then there can be a reversal of the required temperature differentials when starting the magnetic heat pump 7. In order to correctly start the heat pump 7, it would be necessary to stop or at least reduce the speed of the fluid circuit pumps 17,19.

The natural cooling provided by the arrangements of Figure 2b solves these problems.

Advantageously, the arrangement of Figure 2b allows for the following prior to starting the magnetic heat pump 7:
- The heat exchanger 25 and cold water chamber of the heat pump 7 can be pre-cooled by liquid in the single closed loop circuit after the thermal contact of said liquid with cold air (by means of the ambient heat exchanger 35).
- The heat exchanger 27 and hot chamber of the heat pump 7 can be preheated by liquid in the single closed loop circuit after the thermal contact of said liquid with warm milk (by means of the tank heat exchanger 29).

So, both heat exchangers 25,27 are then more likely to be at temperatures in the range of the magnetocaloric materials close to them, and this will allow the heat pump 7 to start more readily.

In addition, during this time of operation, the motor driving the magnetic heat pump 7 will be stopped, and the related energy requirements will be spared, which will reduce the running costs.

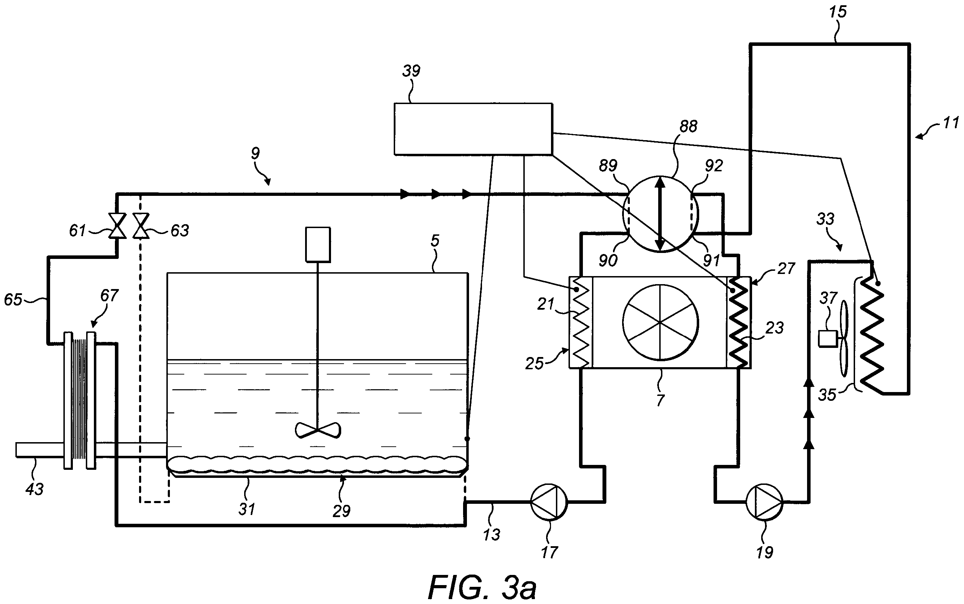

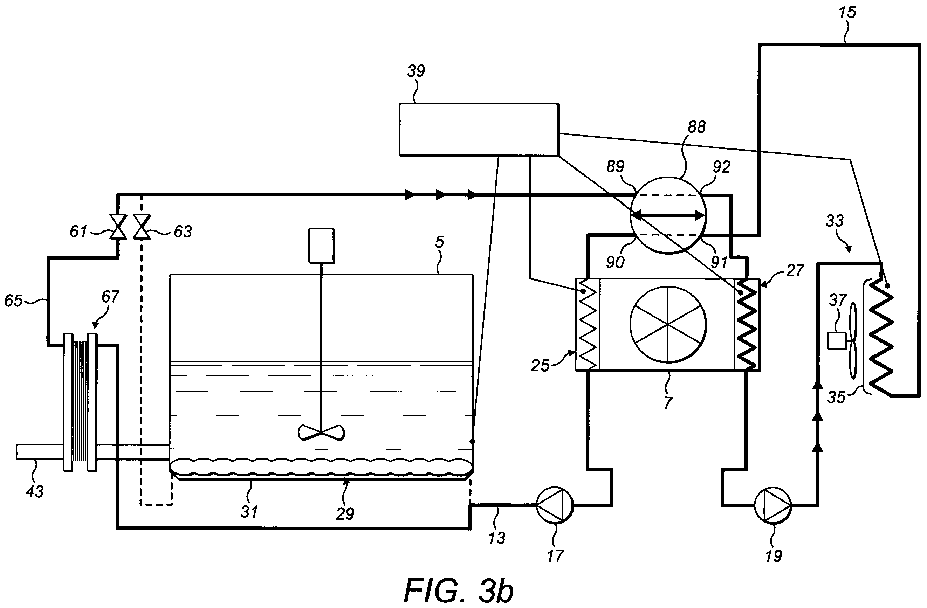

The apparatus shown in Figures 3a and 3b is a development of the apparatus shown in Figures 2a and 2b.

The apparatus of Figure 3a and 3b differs from that of Figures 2a and 2b in that two additional solenoid activated valves 61,63 are added, together with an additional line 65 of fluid circuitry forming an alternative fluid pathway in the first fluid circuit 13. These valves selectively restrict (and preferably prevent) and permit a flow of fluid. The use of the additional line 65 is selected through operation of said two additional valves 61,63.

A part of the additional line 65 of fluid circuitry forms part of a further heat exchanger 67. The further heat exchanger 67 is positioned relative to the inlet pipe(s) 43 of the tank 5 so as to allow for thermal communication between milk in the inlet pipe(s) 43 and fluid in the additional line 65 of fluid circuitry. The additional line 65 extends the first fluid circuit 13 of the arrangement shown in Figures 2a and 2b. Valves 61 and 63 are configured so as to be capable of selectively diverting fluid in the first fluid circuit 13 from the tank heat exchanger 29 to the inlet pipe heat exchanger 67. When diverting fluid in this way, the first additional valve 61 is opened to allow the passage of fluid therethrough, and the second additional valve 63 is closed to prevent the passage of fluid therethrough. Milk entering the tank 5 via the inlet pipe(s) 43 may be thereby cooled prior to entering the tank 5. The milk in the inlet pipe(s) 43 may therefore be cooled from a temperature of approximately 35°C to a lower temperature of, for example, between 20°C and 3°C. The valves 61,63 may be automatically controlled by the electronic control system 39. The operation of the two valves 61,63 may be such that fluid in the first fluid circuit 13 is directed to the inlet pipe heat exchanger 67 only when fresh milk is being newly introduced into the tank 5 via the inlet pipe(s) 43.

Accordingly, when fresh milk is not being introduced into the tank 5, fluid in the first fluid circuit 13 is directed solely through the tank heat exchanger 29 as in the arrangement of Figure 2a. Alternatively, the additional valves 61,63 maybe operated (i.e. both opened, each one either fully or partially) so as to direct fluid in the first fluid circuit 13 to both the inlet pipe heat exchanger 67 and the tank heat exchanger 29. The degree to which fluid in the first fluid circuit 13 is biased to the two heat exchangers 67,29 may be determined upon the cooling requirements of milk in the inlet pipe(s) 43 versus the cooling requirement of milk in the tank 5. This determination, and/or the monitoring of milk temperatures in order to allow said determination, may be made automatically (i.e. without human intervention) by means of the electronic control system 39.

It will be appreciated that the valve 88 of the arrangement shown in Figure 3b may be operated as described in relation to the arrangement of Figure 2b so as to allow for a natural cooling of milk. The valve 61,63 may nevertheless still operate as described.

It should be noted that, in Figure 3a and 3b, the two additional valves 61,63 are positioned downstream of the inlet heat exchanger 67 and the tank heat exchanger 29 respectively. In an alternative embodiment (not shown), the two additional valves 61,63 are positioned upstream of the inlet heat exchanger 67 and the tank heat exchanger 29 respectively, just downstream of the T piece of line 13 (see Figure 3a and 3b) which itself is located immediately downstream of the pump 17.

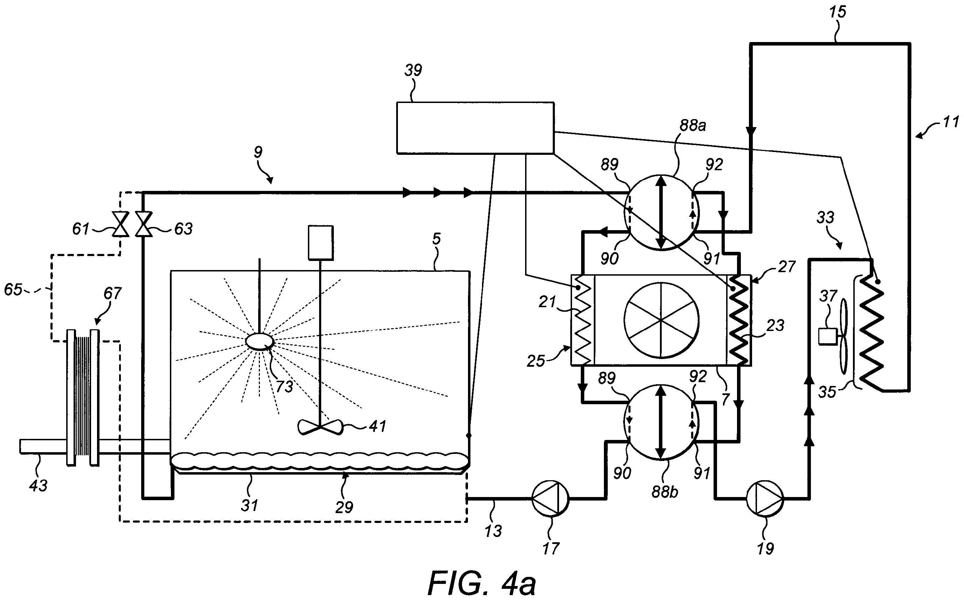

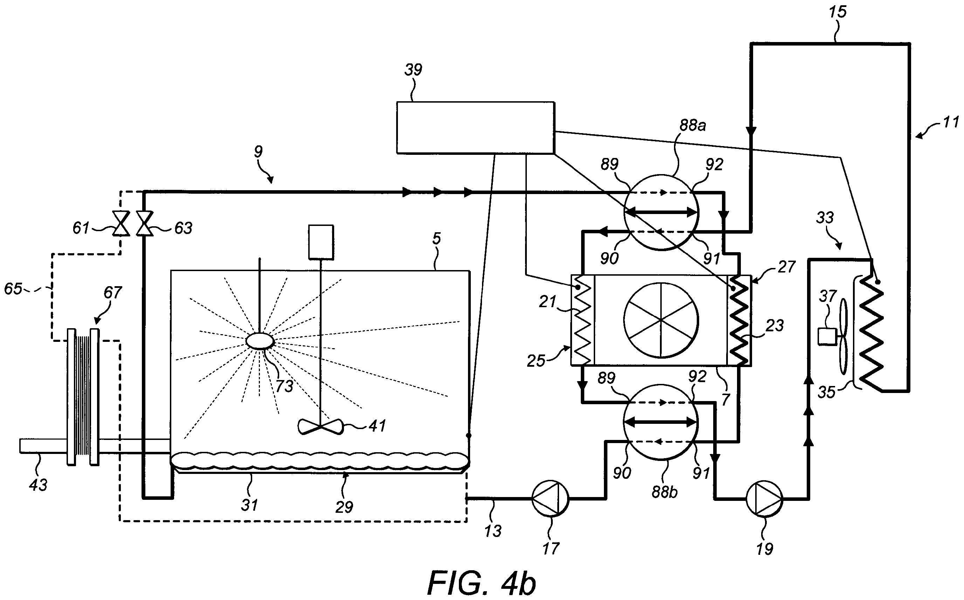

A further modification is shown in Figure 4a and 4b of the accompanying drawings wherein the arrangement of Figures 3a and 3b have been modified to include yet a further four-way valve 88b for opening/closing lines of fluid circuitry.

It will be appreciated by the skilled person that the apparatus shown in Figures 4a and 4b may also encompass embodiments which do not include the additional line 65 of fluid circuitry and the further heat exchanger 67.

As shown in Figure 4a, when the first and second valves 88a,88b are in their first configurations, fluid flows through the first fluid circuit 13 from the tank heat exchanger 29, through the first flow path 93 of the first valve 88a between the first port 89 and the second port 90, through the "cool side" of the magnetic heat pump 7, then through the first flow path 93 of the second valve 88b between the first port 89 and the second port 90, and back to the tank heat exchanger 29. Concurrently, fluid flows through the second fluid circuit 15 from the ambient fluid heat exchanger 33, through the second flow path 95 of the first valve 88a between the third port 91 and the fourth port 92, through the "warm side" of the magnetic heat pump 7, then through the second flow path 95 of the second valve 88b between the third port 91 and the fourth port 92, and back to the ambient fluid heat exchanger 33. This configuration provides a standard cooling cycle as discussed with relation to Figures 2a and 3a.

Alternatively, as shown in Figure 4b, when the first and second valves 88a,88b are in their second configurations, fluid flows through the first fluid circuit 13 from the tank heat exchanger 29, through the third flow path 96 of the first valve 88a between the first port 89 and the fourth port 92, through the "warm side" of the magnetic heat pump 7, then through the fourth flow path 97 of the second valve 88b between the third port 91 and the second port 90, and back to the tank heat exchanger 29. Concurrently, fluid flows through the second fluid circuit 15 from the ambient fluid heat exchanger 33, through the fourth flow path 97 of the first valve 88a between the third port 91 and the second port 90, through the "cool side" of the magnetic heat pump 7, then through the third flow path 96 of the second valve 88b between the first port 89 and the fourth port 92, and back to the ambient fluid heat exchanger 33. This configuration provides a reverse cycle for heat cleaning purposes.

The four-way valves 88 selectively restrict (and preferably prevent) and permit a flow of fluid. The arrangement allows the refrigeration cycle of the magnetic heat pump to be effectively reversed. As a consequence, the tank heat exchanger 29 and/or the inlet pipe heat exchanger 67 may operate to heat fluid in the tank 5 and the inlet pipe(s) 43. This is of particular use when cleaning the inlet pipe(s) 43 and the tank 5 with cleaning fluids (for example, water and detergent). The specific arrangement of the valves 88 will also be apparent to a reader skilled in the art from a comparison of the two circuit diagrams provided by, for example, Figures 3a/3b and 4a/4b.

When the valves 88 are in their first configurations, as shown in Figure 4a, the system is configured provide a standard cycle for cooling as discussed in relation to Figures 2a and 3 a.

Conversely, when the valves 88 are in their second configurations, as shown in Figure 4b, the system of is configured to provide a reverse cycle for heat cleaning purposes.

This combination of valve configurations is achieved through automated operation of the valves 88a,88b by means of the electronic control system 39.

The reverse cycle provided by the arrangement of Figure 4b is of particular use after refrigerated milk has been collected from the tank 5 and the interior of the tank 5 needs to be cleaned. As discussed below, tank can be manually cleaned or automatically cleaned.

When a tank is manually cleaned (as is generally the case for open tank types), the farmer initially introduces some water into the tank in order to rinse it. This water is then drained. Then he introduces some hot water into the tank, with the addition of some cleaning agents (either basic detergents or acids). In prior art systems, this cleaning water needs to be hot, generally by using hot water from a water boiler or from a heat recovery system. Then, the farmer brushes the tank inner surface with this cleaning water.

A good cleaning of a tank is generally dependent upon four factors:
- chemical action (from the detergents, or other products, added to the water)
- mechanical action (for example, brushing)
- time
- thermal action

Depending on the type of detergent used, the temperature of the cleaning water inside the tank is generally required to be greater than 45°C.

After the main cleaning, the cleaning water is drained, and the tank is rinsed with clean water.

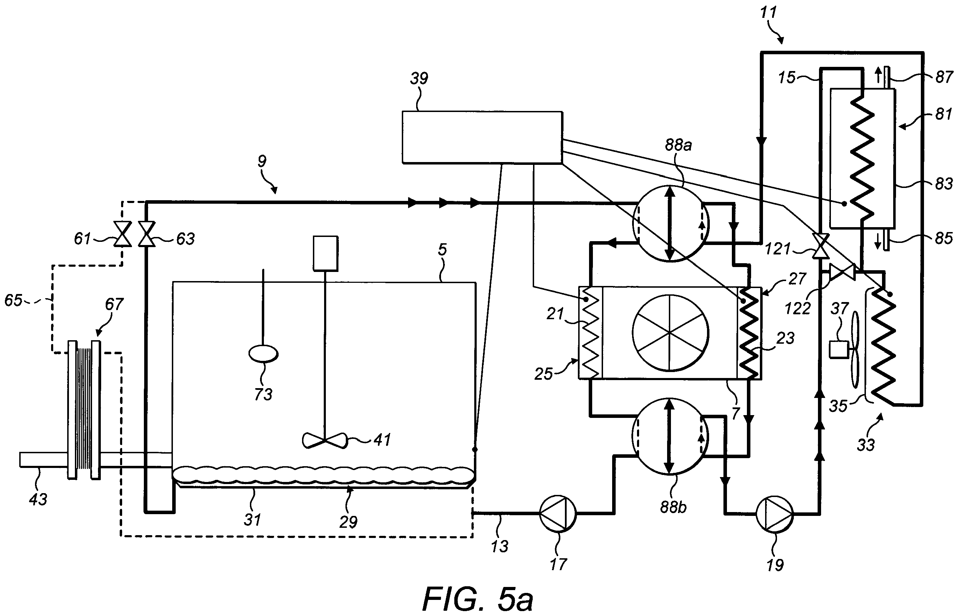

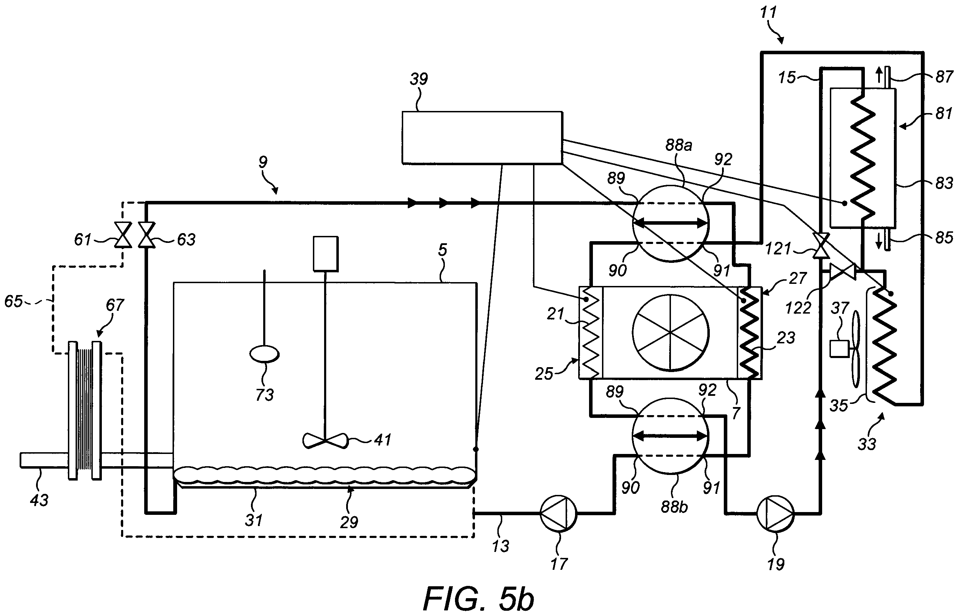

With the system shown in Figure 4b, if the temperature of the cleaning water inside the tank is not sufficient (which may be the case if, for example, the farmer does not have a heat recovery system as shown Figures 5a and 5b or any other effective water heating system, or he has only a partially effective water heating system such as a solar powered water heater), then the farmer can start the refrigeration means 7 in order to heat the interior surfaces of tank 5 and also the cleaning water in the tank 5. Then, in a similar way as described above for operating the heat pump for cooling purpose, the heat from the ambient air is transferred via the ambient heat exchanger 35 to the liquid circulating in the fluid circuit associated with the ambient heat exchanger 35 (which is at a lower temperature) and pumped to the cold side of the magnetic heat pump 7. This heat is gradually transferred via the cold heat exchanger 25 to the internal liquid of the cold chamber, and then to the fluid passing through magnetocaloric material Type 1, and transferred through magnetocaloric materials Type 2, Type 3 and Type 4 to the middle chamber at a higher temperature, and then through magnetocaloric material Types 5, 6, 7 and 8 to the warm chamber, at a yet higher temperature. By means of the hot heat exchanger 27, this heat is communicated at a higher temperature, close to the Curie point of the magnetocaloric material Type 8, to the liquid circulating in the fluid circuit associated with the tank heat exchanger 29. This heat is finally transferred to the surfaces of the tank 5 and the cleaning water inside the tank through the tank heat exchanger 29, with the help of the agitator 41, and optionally by means of the inlet heat exchanger 67 (see below for a transfer of heat solely by means of the heat exchanger 67).

It is noted that this system can lead to a reduction in the quantity of water needed in a farm for cleaning purpose. This is because the interior surfaces of the tank 5 (in particular, the base of the tank 5, and/or the walls of the tank 5 depending on the location of the tank heat exchanger 29) may be heated directly by the fluid pumped from the magnetic heat pump through the tank heat exchanger 29. Unlike the prior art method, an external source of heated water is not therefore required to raise the temperature of the tank surfaces from the refrigeration temperature (of approximately 3°C) to a final cleaning temperature of more than 45°C. Only an external source of cleaning water is then required for spreading and brushing the detergent solution on the tank wall and for subsequent rinsing. A reduced amount of water is needed because the heating water (in the fluid circuitry) remains separate from the cleaning water. In the prior art method, the heating water and the cleaning water are the same.

Also, the system of Figure 4b reduces heating costs and improves efficiency. Regarding the improved efficiency, instead of using an electrical boiler having a Coefficient of Performance (COP) of approximately 1 (1 kWh of heated water needs 1kWh of electricity), the system of Figure 4b uses the magnetic heat pump 7 which can provide a much higher COP (the expected performance being 4 to 4.5, which provides 4 to 4.5 kWh of heated water from only 1 kWh of electricity).

When a tank is automatically cleaned (as is generally the case for closed tank types), the operational steps described above in relation to the prior art manual cleaning are performed automatically under the control of an electronic programmer. This is quite similar to the operation of a domestic dish washer. The rinsing water is first pumped to the tank by means of automatically operated valves and a spraying device. Then this water is drained, generally with an automatic drain valve or with a pump. The cleaning water is then introduced, with required detergents or acid products added. Generally, this is hot water prepared in a water boiler using electricity, preferably during the night at low cost electricity rates.

The prior art systems either require large quantities of water in order to heat up the inner tank surface and allow for successive subsequent rinses using hot water, or they include an in-line water heater which allows cleaning water in the tank to be heated as it is circulated by a cleaning pump. This heater is costly and needs to consume electricity at the time when the cleaning occurs, which is often during times of high cost electricity rates. Once heated, the water is sprayed onto the tank interior surfaces with a spraying device. The brushing of the manual process is therefore replaced in the automated process by a spraying action. Finally, the tank is drained, and rinsed.

The system shown Figure 4b can favourably obviate the need for an in-line heater, as described above, through use of the magnetic heat pump 7, which can be operated automatically by means of an electronic controller 39 including an electronic cleaning programmer for controlling the cleaning cycle. During the cleaning, the magnetic heat pump 7 is operated, together with the fan 37 and the pumps 17,19, and thereby heats interior surface (the base) of the tank 5. The cleaning fluid introduced into the tank is then heated on the tank base and recirculated by a cleaning pump (not shown) so as to be drained from the tank 5 and dispensed back into the tank 5 via the spraying device 73. Alternatively, a further in-line heat exchanger could be provided in a modification to the system of Figure 4b whereby fluid pumped from the hot heat exchanger 27 is directed to said in-line heat exchanger for heating cleaning fluid prior to said fluid being introduced into the tank 5 via the spray device 73. With use of the in-line heat exchanger, cleaning fluid does not need to be heated in the tank 5 itself and so the fluid circuitry may be such as to allow the fluid from the hot heat exchanger 27 to bypass the tank heat exchanger 29 and/or the inlet heat exchanger 67. The agitator 41 may be cleaned and used to aid cleaning as necessary.

Advantages of the system of Figure 4b include its low use of water and electricity. The system may also be provided as a relatively inexpensive modification to the systems of Figures 2a/2b and 3a/3b.

In addition to tank cleaning, it will be understood that the milking machinery, tank inlet pipe(s), and connecting milk lines (the milk line circuitry) need to be periodically cleaned. In the prior art, this may involve disconnecting the tank inlet pipe(s) from the tank.

The cleaning operation may be controlled automatically by an electronic programmer. Cleaning water and rinsing water is successively circulated through the milk line circuitry, from the milking machine to the inlet pipe, and back to a container close to the milking machine. The cleaning needs are similar to those of the tank. Accordingly, cleaning water is circulated through the milk line circuitry at relatively high temperatures, normally above 45°C.

In cold ambient conditions, it can be difficult to achieve and/or maintain temperatures above 45°C, especially if the milk line circuitry is long because the water cools along its way to the tank inlet. The basic requirement for a good cleaning is therefore not met.

In the arrangement of Figure 4b, when the milk line circuitry needs to be cleaned, cleaning water is circulated through it, including the pipe inlet(s) 43 and the milk side of the inlet pipe heat exchanger 67, with the magnetic heat pump 7 being operated together with the fan 37 and the two circuit pumps 17,19.

The heat from the ambient air is transferred to the cleaning water circulating in the inlet pipe(s) 43 via the heat exchanger 67 as described above. This process boosts the cleaning temperature at the tank end of the milk line circuitry, leading to better quality cleaning, and to a reduction of the heating costs for heating the cleaning water, since the COP of the magnetic heat pump 7 is comparatively high.

It will further be understood that the refrigerated milk stored in the refrigeration tank may be heated at an appropriate time after milking. Milk may be heated in the same way as the fluid is heated in the above described cleaning operation. The milk may be heated in a process for producing cheese or other varieties of milk product (for example, yoghurt or ricotta). After the milk is heated, it would typically be mixed with yeast to produce the required milk product.

A modification to the arrangement of Figures 4a/4b is shown in Figures 5a/5b. The modification introduces a further heat exchanger 81 in line (i.e. in series) with and upstream of the ambient heat exchanger 33. The further heat exchanger 81 allows for recovery of heat from the "warm side" of the magnetic heat pump 7. In the arrangement of Figure 5a/5b, the further heat exchanger 81 operates as a boiler and comprises a water tank 83 having a water inlet 85 at the bottom thereof and a water outlet 87 at the top thereof. Water (a secondary use fluid) to be heated flows through the heat exchanger 81 from the inlet 85 to the outlet 87 and is thereby placed in thermal communication with the second fluid circuit 15 and heated. The heated water exiting the outlet 87 may be subsequently used for domestic purposes or, for example, for the cleaning needs of a farm.

The modification further introduces first and second isolation valves 121,122 which allow the heat exchanger 81 to be selectively isolated (i.e. not used) or connect in line (i.e. in series) as mentioned above. It will be understood that when the heat exchanger 81 is to be isolated, the first isolation valve 121 is closed so as to prevent the passage of fluid therethrough and the second isolation valve 122 is open so as to permit the passage of fluid therethrough. In this case, only the heat exchanger 33 is in use. Furthermore, it will be understood that when the heat exchanger 81 is to be used, the first isolation valve 121 is open so as to permit the passage of fluid therethrough and the second isolation valve 122 is closed so as to prevent the passage of fluid therethrough. In this case, both the heat exchanger 33 and the further heat exchanger 81 are in use.

It will be appreciated that the electronic control system 39 may monitor the temperature of the water being heated within the heat exchanger 81 and/or the temperature of the water exiting the heat exchanger 81. In response to the measured temperature, the electronic control system 39 may vary the speed of the fan 37 so as to increase or decrease the heat transferred from the second fluid circuit 15 to the water in the heat exchanger 81. The fan 37 may be stopped in order to maximise the heating capacity of the heat exchanger 81 for a given output of the magnetic heat pump 7.

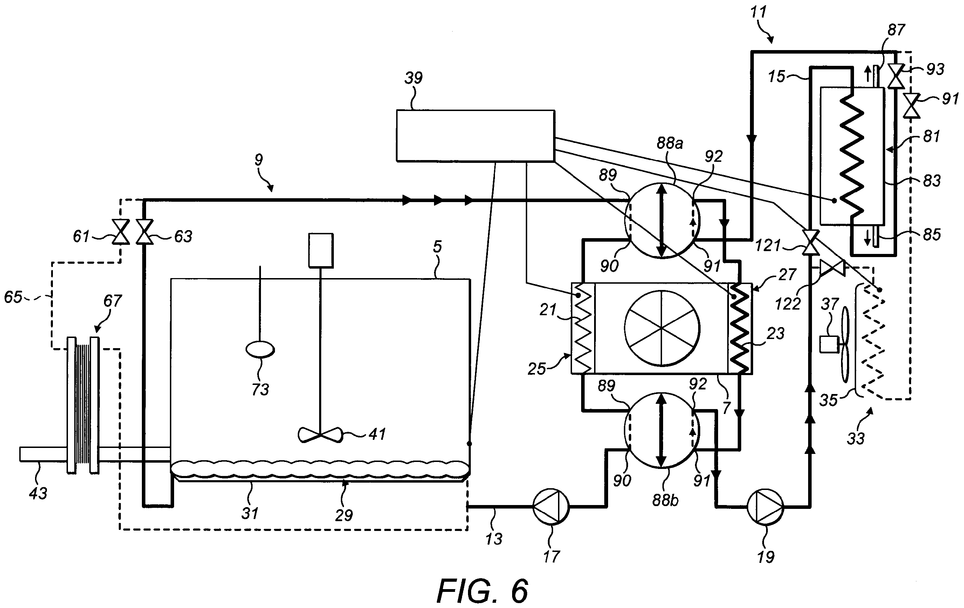

A variation of the modification provided in Figure 5a is shown in Figure 6 of the accompanying drawings. In Figure 6, rather than providing the further heat exchanger 81 in series with the ambient heat exchanger 33, the further heat exchanger 81 is provided in parallel with the ambient heat exchanger 33. A first solenoid operated two-way valve 91 controls fluid flow (in the second fluid circuit 15) to the ambient heat exchanger 33. Also, a solenoid operated two-way valve 93 controls fluid flow (within the second fluid circuit 15) to the further heat exchanger 81. The two valves 91,93 may, in an alternative embodiment, be replaced with a single three-way valve. The or each valve 91,93 controlling flow to the heat exchangers 33,81 is controlled automatically by the electronic control system 39. As such, if the water being heated in the heat exchanger 81 has reached a required temperature, then fluid in the second fluid circuit 15 may be directed entirely to the ambient heat exchanger 33. If said water is below the required temperature, then the control valves 91,93 may be operated to direct fluid in the second fluid circuit 15 entirely to the further heat exchanger 81. Fluid in the second fluid circuit may be directed to both of said heat exchangers 33,81 to control the rate at which water in the heat exchanger 81 is heated.

The two valves 91,93 (or one three-way valve) shown in Figure 6 are located downstream of the heat exchangers 33,81 but in an alternative embodiment they can be located upstream of the heat exchangers 33,81 and thereby achieve the same control. The valves 91,93 selectively restrict (and preferably prevent) and permit a flow of fluid.

It will be appreciated that the embodiment of the present invention shown in Figure 6 is a particularly preferred system, which includes circuits and valves for achieving all the functions described above in relation to Figures 2a/2b, 3a/3b, 4a/4b and 5a/5b. Specifically, the embodiment of Figure 6 is a modified version of the system shown in Figures 4a/4b, wherein the system has been modified to included a further heat exchanger 81 in parallel with the ambient heat exchanger 33 as previously described above.

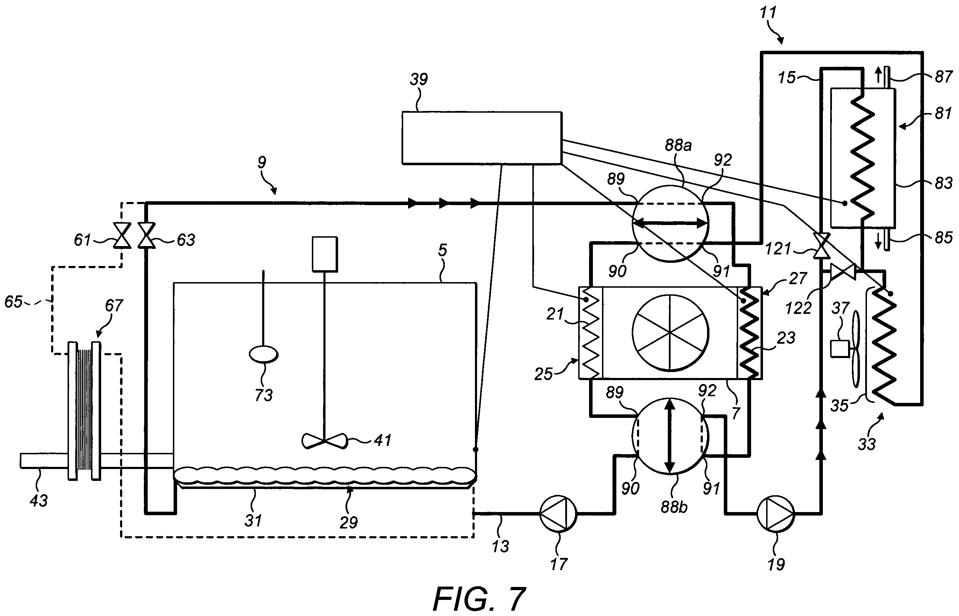

Figure 7 shows the embodiment of Figure 5b, wherein the first valve 88a is in its second configuration, however the second valve 88b is in its first configuration. This arrangement of the valves 88a,88b allows the fluid in the first and second circuits 13,15 to be connected to one another to form a single closed loop circuit between the tank 5 and the heat exchanger 35.

It will be appreciated by the skilled person, that the apparatus shown in Figures 5a-7 may be modified to not include the additional line 65 of fluid circuitry and the further heat exchanger 67. Furthermore, the apparatus shown in Figure 7 may be modified to include the further heat exchanger 81 in parallel with and upstream of the ambient heat exchanger 33. Alternatively, the apparatus shown in Figure 7 may be modified to not include the further heat exchanger 81 at all.

The valves 88, 88a and 88b in the abovementioned embodiments are solenoid valves operable by the electronic control system 39.

Furthermore, the location of the four-way valves 88 with regard to the embodiments shown in Figures 2b, 3b and 7 is such that one or the other, or both, of the pumps 17,19 are used to pump fluid through the single closed loop circuit. The pressure drop across the cold and hot heat exchangers 29,33 may be monitored and may determine which of the two pumps is used or whether both pumps are used. This monitoring and determination, and the consequential control of the valves, may be undertaken automatically (i.e. without human intervention) by the electronic control system 39.

It will also be appreciated that the inlet pipe(s) 43 of the arrangements shown in any of Figures 2a to 7 may be connected to automatic/robotic milking means as has been shown in relation to the embodiment of Figure 1.

It will be further understood that the magnetic heat pump 7 may provide a variable cooling/heating power by varying the speed of the magnetic rotor. The speed of the pumps 17,19 may also be varied. This allows an adaptation of the system to the cooling needs of the milk. For example, in the system described in relation to Figures 3a/3b, the cooling power provided by the magnetic heat pump 7 can be conveniently modulated according to incoming flow rate and/or temperature of the milk within the tank inlet pipe 43. Variable speed motors, or motors with different speed steps, may be used for driving the heat pump rotor and/or pumps 17,19.

Known systems for refrigerating and heating bulk milk systems have disadvantages not associated with the system described herein. The systems require a relatively multiple valves and additional circuitry for connecting and disconnecting fluid circuits to refrigeration means in order to switch the systems from a standard refrigeration cycle to a single loop natural cooling cycle, or from a standard refrigeration cycle to a reverse cycle heating system. This increases the costs associated with manufacturing and installing the system and also introduces unnecessary elements into the system which could act as potential points of failure. The use of four-way valves as in the present invention removes the need for additional circuitry and reduces the number of valves required to achieve the various fluid flow path configurations as described above. This also makes maintenance and repair of the system less arduous as there are less valve members and relatively less circuitry, therefore less checking points in the system.

The present invention is not limited to the specific embodiments described above. Alternative arrangements and suitable materials will be apparent to a reader skilled in the art. For example, the invention is not limited to use the four-way valve depicted in Figures 8a and 8b. Any form of four-way valve capable of providing the necessary flow paths required for the embodiments described above may be utilised. Additionally, the invention is not limited to the fluid circuitry configurations depicted in Figures 2a to 7. Any alternative circuitry configuration may be applied in order achieve the fluid connections to the four-way valves as described in the above embodiments of the invention.

## Claims

1. Apparatus comprising:
a refrigerated bulk fluid tank (5);
refrigeration means (7) for selectively refrigerating or heating fluid stored in said tank; and
at least one four-way valve (88) in fluid communication with said refrigeration means wherein said four-way valve comprises:
a first port (89), second port (90), third port (91), and fourth port (92); and
a valve member (93) movable between a first position and a second position wherein, in said first position, fluid is flowable along a first flow path (94) between said first port (89) and said second port (90) and along a second flow path (95) between said third port (91) and said fourth port (92), and wherein, in said second position, fluid is flowable along a third flow path (96) between said first port (89) and said forth port (92) and along a fourth flow path (97) between said third port (91) and said second port (90), **characterized in that** the apparatus also comprises first thermal communication means (9) for transporting heat between fluid stored in said tank (5) and said refrigeration means (7), having a first closed loop fluid circuit (13) extending between said tank (5) and said refrigeration means (7), a first part (31) of said first circuit (13) being part of a first heat exchanger (29) providing thermal communication between fluid stored in said tank (5) and fluid in said first fluid circuit (13); and
a second thermal communication means (11) for transporting heat between said refrigeration means (7) and from ambient fluid, having a second closed loop fluid circuit (15) extending from said refrigeration means (7), a first part (35) of said second circuit (15) being part of a second heat exchanger (33) providing thermal communication between ambient fluid and fluid in said second fluid circuit (15).

2. Apparatus as claimed in claim 1 comprising first and second four-way valves (88a, 88b) in fluid communication with said refrigeration means (7), said valves fluidly connected in said apparatus to provide (i) cooling of fluid in said tank (5) by means of said refrigeration means when said valve members (93) of said valves are in said first position, and (ii) reverse-cycle heating of fluid in said tank when said valve members (93) of said valves are in said second position.

3. Apparatus as claimed in claim 1 or claim 2 comprising:
first and second four-way valves (88a, 88b) in fluid communication with said first and second closed loop fluid circuits (13, 15) such that when said valve members (93) of said valves (88a, 88b) are (i) in said first position, heat is transferable from said fluid in said tank (5) to said ambient fluid by means of said refrigeration means (7), and (ii) when said valve members (93) are in said second position, heat is transferable from said ambient fluid to said fluid in said tank by means of said refrigeration means.

4. Apparatus as claimed in claim 3 wherein:
a) when said valve member (93) of said first and second four-way valves (88a, 88b) are in said first position:
said fluid in said first fluid circuit (13) is flowable from said first part (31) of said circuit through said first four-way valve (88a) by means of said first flow path (94), through said refrigeration means (7), through said second valve (88b) by means of said first flow path (94) and back to said first part (31) of said circuit such that heat from fluid in said tank is transferable to said refrigeration means; and
said fluid in said second fluid circuit (11) is flowable from said first part (35) of said second circuit (11) through said first four-way valve (88a) by means of said second flow path (95), through said refrigeration means (7), through said second valve (88b) by means of said second flow path (94) and back to said first part (35) of said circuit such that said heat from said refrigeration means (7) is transferable to said ambient fluid, or
b) wherein when said valve members (93) of said first and second four-way valves (88a, 88b) are in said second position: said fluid in said first fluid circuit (13) is flowable from said first part (31) of said first circuit (13), through said first four-way valve (88a) by means of said third flow path (96), through said refrigeration means (7), though said second valve (88b) by means of said fourth flow path (97) and back to said first part (31) of said first circuit (13) such that heat from said refrigeration, means (7) is transferable to fluid in said tank (5); and said fluid in said second fluid circuit (11) is flowable from said first part (35) of said second circuit (11) through said first four-way valve (88a) by means of said fourth flow path (97), through said refrigeration means (7), through said second valve (88b) by means of said third flow path (96) and back to said first part (35) of said second circuit such that said heat from said ambient fluid is transferable to said refrigeration means.

5. Apparatus as claimed in claim 1 wherein said four-way valve (88) is fluidly connected in said apparatus such that when said valve member (93) of said four-way valve (88) is in said first position, fluid in said tank (5) is cooled by means of said refrigeration means (7), and when said valve member (93) of said four-way valve (88) is in said second position, fluid in said tank (5) is cooled by means of ambient fluid.

6. Apparatus as claimed in claim 1 or claim 5 comprising:
first thermal communication means (9) for transporting heat from fluid stored in said tank (5) to said refrigeration means (7), having a first closed loop fluid circuit (13) extending between said tank (3) and said refrigeration means (7), a first part (31) of said first circuit being part of a first heat exchanger (29) providing thermal communication between fluid stored in said tank (5) and fluid in said first fluid circuit (13);
a second thermal communication means (11) for transporting heat from said refrigeration means (7) to ambient fluid, having a second closed loop fluid circuit (15) extending from said refrigeration means, a first part (35) of said second circuit (15) being part of a heat exchanger (33) providing thermal communication between ambient fluid and fluid in said second fluid circuit (15); and
wherein said valve member (93) of said four-way valve (88) in said first position provides thermal communication between said tank and said refrigeration means (7) and thermal communication between said refrigeration means and said ambient fluid, and wherein when said valve member (93) is in said second position, said valve (88) selectively disconnects substantial thermal communication between said tank (5) and said refrigeration means and thermal communication between said refrigeration means and said ambient fluid and establishes thermal communication between said tank (5) and said ambient fluid, preferably wherein said four-way valve is operable, when said valve member (93) is in said second position, to place said first and second fluid circuits in fluid communication with one another so as to provide a single closed loop circuit comprising said first part (31) of said first circuit (13) and said first part (35) of said second circuit (15).

7. Apparatus as claimed in claim 6 wherein when said valve member (93) of said four-way valve (88) is in said first position:
said fluid in said first fluid circuit (13) is flowable from said first part (31) of said first circuit (13) through said four-way valve (88) by means of said first flow path (94), through said refrigeration means (7) and back to said first part (31) of said first circuit (13) such that heat from fluid in said tank is transferable to said refrigeration means; and
said fluid in said second fluid circuit (11) is flowable from said first part (35) of said second circuit (11) through said four-way valve (88) by means of said second flow path (95), through said refrigeration means (7) and back to said first part (35) of said second circuit (13) such that said heat from said refrigeration means (7) is transferable to said ambient fluid.

8. Apparatus as claimed in claim 6 or claim 7 wherein when said valve member (93) of said four-way valve (88) is in said second position:
said fluid in said first fluid circuit (13) is flowable from said first part (31) of said first circuit (13) through said four-way valve (88) by means of said third flow path (96), through said refrigeration means (7), through said first part (35) of said second circuit (11), through said four-way valve (88) by means of said fourth flow path (97), though said refrigeration means (7), and back to said first part (31) of said first circuit (13) such that a single closed looped circuit is defined and said heat from fluid in said tank is transferable to said ambient fluid.

9. Apparatus as claimed in any of claims 3, 4 or 6 to 8, wherein a second part (21) of the first circuit (13) is part of a third heat exchanger (25) providing thermal communication between fluid in the first fluid circuit (13) and said refrigeration means (7), preferably wherein a second part (23) of said second circuit (15) is part of a fourth heat exchanger (27) providing thermal communication between fluid in said second fluid circuit (15) and said refrigeration means, more preferably further comprising fluid displacement means for moving ambient fluid through said second heat exchanger (33), wherein said ambient fluid is preferably air and said fluid displacement means is preferably a fan (37), more preferably wherein said or each closed loop fluid circuit (13,15) comprises a pump (17,19) for pumping fluid through the or each closed loop fluid circuit (13,15), preferably wherein said fluid in said or each closed loop fluid circuit (13,15) is water, preferably wherein said water is mixed with an anti-freezing agent.

10. Apparatus according to any of the preceding claims wherein said refrigeration means (7) is magnetic refrigeration means comprising a magnetic heat pump.

11. Apparatus as claimed in claim 10, wherein said magnetic refrigeration means operates under automatic control, preferably wherein said magnetic refrigeration means comprises at least two magnetocalaric members (7), preferably wherein the magnetic refrigeration means comprises two or more magnetocaloric members having different Curie points, each Curie point being between substantially minus 10 degrees Celsius and substantially plus 70 degrees Celsius and preferably being between minus 4 degrees Celsius and plus 57 degrees Celsius, more preferably wherein the magnetic refrigeration means comprises magnetocaloric members having different Curie points, said Curie points being minus 4 degrees Celsius, plus 4 degrees Celsius, plus 10 degrees Celsius, plus 17 degrees Celsius, plus 24 degrees Celsius, plus 34 degrees Celsius, plus 42 degrees Celsius, and plus 57 degrees Celsius., and preferably wherein the magnetocaloric members are manufactured from one of (i) Gadolinium alloys; (ii) La Fe Co Si alloys; and (iii) Mn Fe P As alloys, more preferably wherein the magnetic refrigeration means comprises two or more magnetocaloric members (7) having an entropy variation produced by a change in magnetic field of 0.5 tesla which is greater than substantially 0.8 J/kg.K across the entirety of different temperature ranges, said temperature range of each magnetocaloric member being within the range of substantially minus 15 degrees Celsius and substantially plus 80 Celsius and preferably within the range of substantially minus 10 degrees Celsius and substantially plus 75 degrees Celsius, and further preferably wherein said temperature range of one the magnetocaloric members has a lower temperature of substantially minus 15 degrees Celsius and said temperature range of another one of the magnetocaloric members has an upper temperature of substantially plus 80 degrees Celsius.

12. Apparatus as claimed in any of the preceding claims, wherein the apparatus further comprises means (106, 108, 110) for milking an animal, such as a cow, preferably wherein the apparatus further comprises means (43) for transporting milk, obtained from an animal by said milking means, from said milking means to said refrigerated bulk milk tank, preferably wherein said means for transporting milk comprises one or more pipes (43) through which the refrigerated bulk milk tank fluidly communicates with the means for milking an animal.

13. Apparatus as claimed in claim 12, wherein the means for milking an animal operates under automatic control, preferably wherein the means for milking an animal comprises robotic milking means (104).

14. Apparatus as claimed in any of claims 1 to 13 wherein said a refrigerated bulk fluid tank is a refrigerated bulk milk tank, preferably wherein the valve member of the four-way valve is made of a thermal insulating material, preferably wherein the valve member of the four-way valve is made of a solid portion of thermal insulating material through which spaced fluid flow paths extend.

15. A method of refrigerating or heating bulle fluid using an apparatus as recited in any of claims 1 to 14.

## Patentansprüche

1. Vorrichtung, umfassend:
einen gekühlten Fluidgroßtank (5);
ein Kühlmittel (7) zum gezielten Kühlen oder Erwärmen von in dem Tank gelagerten Fluid; und
mindestens ein Vierwegeventil (88) in Fluidverbindung mit dem Kühlmittel, wobei das Vierwegeventil Folgendes umfasst:
eine erste Öffnung (89), zweite Öffnung (90), dritte Öffnung (91) und vierte Öffnung (92); und
ein Ventilelement (93), das zwischen einer ersten Stellung und einer zweiten Stellung bewegbar ist, wobei in der ersten Stellung Fluid entlang einem ersten Strömungsweg (94) zwischen der ersten Öffnung (89) und der zweiten Öffnung (90) und entlang einem zweiten Strömungsweg (95) zwischen der dritten Öffnung (91) und der vierten Öffnung (92) fließen kann und wobei in der zweiten Stellung Fluid entlang einem dritten Strömungsweg (96) zwischen der ersten Öffnung (89) und der vierten Öffnung (92) und entlang einem vierten Strömungsweg (97) zwischen der dritten Öffnung (91) und der zweiten Öffnung (90) fließen kann, **dadurch gekennzeichnet, dass** die Vorrichtung auch ein erstes Wärmeübertragungsmittel (9) zum Transportieren von Wärme zwischen in dem Tank (5) gelagertem Fluid und dem Kühlmittel (7) umfasst, das einen ersten geschlossenen Fluidkreislauf (13) aufweist, der zwischen dem Tank (5) und dem Kühlmittel (7) verläuft, wobei ein erster Teil (31) des ersten Kreislaufs (13) Bestandteil eines ersten Wärmetauschers (29) ist, der für eine Wärmeübertragung zwischen in dem Tank (5) gelagertem Fluid und Fluid in dem ersten Fluidkreislauf (13) sorgt; und
ein zweites Wärmeübertragungsmittel (11) zum Transportieren von Wärme zwischen dem Kühlmittel (7) und von Umgebungsfluid aus, das einen zweiten geschlossenen Fluidkreislauf (15) aufweist, der von dem Kühlmittel (7) aus verläuft, wobei ein erster Teil (35) des zweiten Kreislaufs (15) Bestandteil eines zweiten Wärmetauschers (33) ist, der für eine Wärmeübertragung zwischen Umgebungsfluid und Fluid in dem zweiten Fluidkreislauf (15) sorgt.

2. Vorrichtung nach Anspruch 1, die ein erstes und zweites Vierwegeventil (88a, 88b) in Fluidverbindung mit dem Kühlmittel (7) umfasst, wobei die Ventile in der Vorrichtung fluidverbunden sind und so für (i) eine Kühlung von Fluid in dem Tank (5) über das Kühlmittel sorgen, wenn sich die Ventilelemente (93) der Ventile in der ersten Stellung befinden, und für (ii) eine Erwärmung von Fluid in dem Tank nach dem Umkehrprinzip, wenn sich die Ventilelemente (93) der Ventile in der zweiten Stellung befinden.

3. Vorrichtung nach Anspruch 1 oder Anspruch 2, umfassend:
ein erstes und zweites Vierwegeventil (88a, 88b) in Fluidverbindung mit dem ersten und zweiten geschlossenen Fluidkreislauf (13, 15), sodass, wenn sich die Ventilelemente (93) der Ventile (88a, 88b) (i) in der ersten Stellung befinden, Wärme von dem Fluid in dem Tank (5) über das Kühlmittel (7) auf das Umgebungsfluid übertragbar ist, und (ii) wenn sich die Ventilelemente (93) in der zweiten Stellung befinden, Wärme von dem Umgebungsfluid über das Kühlmittel auf das Fluid in dem Tank übertragbar ist.

4. Vorrichtung nach Anspruch 3, wobei:
a) wenn sich das Ventilelement (93) des ersten und zweiten Vierwegeventils (88a, 88b) in der ersten Stellung befindet:
das Fluid in dem ersten Fluidkreislauf (13) von dem ersten Teil (31) des Kreislaufs aus durch das erste Vierwegeventil (88a) über den ersten Strömungsweg (94), durch das Kühlmittel (7), durch das zweite Ventil (88b) über den ersten Strömungsweg (94) und zurück zum ersten Teil (31) des Kreislaufs fließen kann, sodass Wärme von Fluid in dem Tank auf das Kühlmittel übertragbar ist; und
das Fluid in dem zweiten Fluidkreislauf (11) von dem ersten Teil (35) des zweiten Kreislaufs (11) aus durch das erste Vierwegeventil (88a) über den zweiten Strömungsweg (95), durch das Kühlmittel (7), durch das zweite Ventil (88b) über den zweiten Strömungsweg (94) und zurück zum ersten Teil (35) des Kreislaufs fließen kann, sodass die Wärme von dem Kühlmittel (7) auf das Umgebungsfluid übertragbar ist, oder
b) wobei, wenn sich die Ventilelemente (93) des ersten und zweiten Vierwegeventils (88a, 88b) in der zweiten Stellung befinden: das Fluid in dem ersten Fluidkreislauf (13) von dem ersten Teil (31) des ersten Kreislaufs (13) aus durch das erste Vierwegeventil (88a) über den dritten Strömungsweg (96), durch das Kühlmittel (7), durch das zweite Ventil (88b) über den vierten Strömungsweg (97) und zurück zum ersten Teil (31) des ersten Kreislaufs (13) fließen kann, sodass Wärme von dem Kühlmittel (7) auf Fluid in dem Tank (5) übertragbar ist; und
das Fluid in dem zweiten Fluidkreislauf (11) von dem ersten Teil (35) des zweiten Kreislaufs (11) aus durch das erste Vierwegeventil (88a) über den vierten Strömungsweg (97), durch das Kühlmittel (7), durch das zweite Ventil (88b) über den dritten Strömungsweg (96) und zurück zum ersten Teil (35) des zweiten Kreislaufs fließen kann, sodass die Wärme von dem Umgebungsfluid auf das Kühlmittel übertragbar ist.

5. Vorrichtung nach Anspruch 1, wobei das Vierwegeventil (88) in der Vorrichtung derart fluidverbunden ist, dass wenn sich das Ventilelement (93) des Vierwegeventils (88) in der ersten Stellung befindet, Fluid in dem Tank (5) über das Kühlmittel (7) gekühlt wird, und wenn sich das Ventilelement (93) des Vierwegeventils (88) in der zweiten Stellung befindet, Fluid in dem Tank (5) über Umgebungsfluid gekühlt wird.

6. Vorrichtung nach Anspruch 1 oder Anspruch 5, umfassend:
ein erstes Wärmeübertragungsmittel (9) zum Transportieren von Wärme aus in dem Tank (5) gelagertem Fluid zu dem Kühlmittel (7), das einen ersten geschlossenen Fluidkreislauf (13) aufweist, der zwischen dem Tank (3) und dem Kühlmittel (7) verläuft, wobei ein erster Teil (31) des ersten Kreislaufs Bestandteil eines ersten Wärmetauschers (29) ist, der für eine Wärmeübertragung zwischen in dem Tank (5) gelagertem Fluid und Fluid in dem ersten Fluidkreislauf (13) sorgt;
ein zweites Wärmeübertragungsmittel (11) zum Transportieren von Wärme von dem Kühlmittel (7) aus zu Umgebungsfluid, das einen zweiten geschlossenen Fluidkreislauf (15) aufweist, der von dem Kühlmittel aus verläuft, wobei ein erster Teil (35) des zweiten Kreislaufs (15) Bestandteil eines Wärmetauschers (33) ist, der für eine Wärmeübertragung zwischen Umgebungsfluid und Fluid in dem zweiten Fluidkreislauf (15) sorgt; und
wobei das Ventilelement (93) des Vierwegeventils (88) in der ersten Stellung für eine Wärmeübertragung zwischen dem Tank und dem Kühlmittel (7) und eine Wärmeübertragung zwischen dem Kühlmittel und dem Umgebungsfluid sorgt, und wobei, wenn sich das Ventilelement (93) in der zweiten Stellung befindet, das Ventil (88) gezielt eine wesentliche Wärmeübertragung zwischen dem Tank (5) und dem Kühlmittel und eine Wärmeübertragung zwischen dem Kühlmittel und dem Umgebungsfluid unterbricht und eine Wärmeübertragung zwischen dem Tank (5) und dem Umgebungsfluid herstellt, wobei das Vierwegeventil vorzugsweise so einsetzbar ist, dass, wenn sich das Ventilelement (93) in der zweiten Stellung befindet, der erste und zweite Fluidkreislauf miteinander in Fluidverbindung gebracht werden, damit ein einziger geschlossener Kreislauf bereitgestellt wird, der den ersten Teil (31) des ersten Kreislaufs (13) und den ersten Teil (35) des zweiten Kreislaufs (15) umfasst.

7. Vorrichtung nach Anspruch 6, wobei, wenn sich das Ventilelement (93) des Vierwegeventils (88) in der ersten Stellung befindet:
das Fluid in dem ersten Fluidkreislauf (13) von dem ersten Teil (31) des ersten Kreislaufs (13) aus durch das Vierwegeventil (88) über den ersten Strömungsweg (94), durch das Kühlmittel (7) und zurück zum ersten Teil (31) des ersten Kreislaufs (13) fließen kann, sodass Wärme von Fluid in dem Tank auf das Kühlmittel übertragbar ist; und
das Fluid in dem zweiten Fluidkreislauf (11) von dem ersten Teil (35) des zweiten Kreislaufs (11) aus durch das Vierwegeventil (88) über den zweiten Strömungsweg (95), durch das Kühlmittel (7) und zurück zum ersten Teil (35) des zweiten Kreislaufs (13) fließen kann, sodass die Wärme von dem Kühlmittel (7) auf das Umgebungsfluid übertragbar ist.

8. Vorrichtung nach Anspruch 6 oder Anspruch 7, wobei, wenn sich das Ventilelement (93) des Vierwegeventils (88) in der zweiten Stellung befindet:
das Fluid in dem ersten Fluidkreislauf (13) von dem ersten Teil (31) des ersten Kreislaufs (13) aus durch das Vierwegeventil (88) über den dritten Strömungsweg (96), durch das Kühlmittel (7), durch den ersten Teil (35) des zweiten Kreislaufs (11), durch das Vierwegeventil (88) über den vierten Strömungsweg (97), durch das Kühlmittel (7) und zurück zum ersten Teil (31) des ersten Kreislaufs (13) fließen kann, sodass ein einziger geschlossener Kreislauf definiert wird und die Wärme aus Fluid in dem Tank auf das Umgebungsfluid übertragbar ist.

9. Vorrichtung nach einem der Ansprüche 3, 4 oder 6 bis 8, wobei ein zweiter Teil (21) des ersten Kreislaufs (13) Bestandteil eines dritten Wärmetauschers (25) ist, der für eine Wärmeübertragung zwischen Fluid in dem ersten Fluidkreislauf (13) und dem Kühlmittel (7) sorgt, wobei vorzugsweise ein zweiter Teil (23) des zweiten Kreislaufs (15) Bestandteil eines vierten Wärmetauschers (27) ist, der für eine Wärmeübertragung zwischen Fluid in dem zweiten Fluidkreislauf (15) und dem Kühlmittel sorgt, bevorzugter ferner umfassend ein Fluidverdrängungsmittel zum Bewegen von Umgebungsfluid durch den zweiten Wärmetauscher (33), wobei das Umgebungsfluid vorzugsweise Luft ist und das Fluidverdrängungsmittel vorzugsweise ein Gebläse (37) ist, wobei bevorzugter der oder jeder geschlossene Fluidkreislauf (13, 15) eine Pumpe (17, 19) zum Pumpen von Fluid durch den oder jeden geschlossenen Fluidkreislauf (13, 15) umfasst, wobei vorzugsweise das Fluid in dem oder jedem geschlossenen Fluidkreislauf (13, 15) Wasser ist, wobei das Wasser vorzugsweise mit einem Frostschutzmittel gemischt ist.

10. Vorrichtung nach einem der vorhergehenden Ansprüche, wobei das Kühlmittel (7) ein Magnetkühlmittel ist, das eine magnetokalorische Wärmepumpe umfasst.

11. Vorrichtung nach Anspruch 10, wobei das Magnetkühlmittel automatisch gesteuert arbeitet, wobei das Magnetkühlmittel vorzugsweise mindestens zwei magnetokalorische Elemente (7) umfasst, wobei das Magnetkühlmittel vorzugsweise zwei oder mehr magnetokalorische Elemente mit unterschiedlichen Curie-Temperaturen umfasst, wobei jede Curie-Temperatur zwischen im Wesentlichen minus 10 Grad Celsius und im Wesentlichen plus 70 Grad Celsius und vorzugsweise zwischen minus 4 Grad Celsius und plus 57 Grad Celsius liegt, wobei das Magnetkühlmittel bevorzugter magnetokalorische Elemente mit unterschiedlichen Curie-Temperaturen umfasst, wobei die Curie-Temperatur minus 4 Grad Celsius, plus 4 Grad Celsius, plus 10 Grad Celsius, plus 17 Grad Celsius, plus 24 Grad Celsius, plus 34 Grad Celsius, plus 42 Grad Celsius und plus 57 Grad Celsius beträgt, und wobei die magnetokalorischen Elemente vorzugsweise aus (i) Gadolinium-Legierungen; (ii) La-Fe-Co-Si-Legierungen oder (iii) Mn-Fe-P-As-Legierungen hergestellt sind, wobei das Magnetkühlmittel bevorzugter zwei oder mehr magnetokalorische Elemente (7) mit einer Entropieänderung aufweist, die durch eine Veränderung eines Magnetfelds von 0,5 Tesla hervorgerufen wird, die größer als im Wesentlichen 0,8 J/kg·K über sämtliche unterschiedliche Temperaturbereiche ist, wobei der Temperaturbereich jedes magnetokalorischen Elements innerhalb des Bereichs von im Wesentlichen minus 15 Grad Celsius und im Wesentlichen plus 80 Celsius und vorzugsweise innerhalb des Bereichs von im Wesentlichen minus 10 Grad Celsius und im Wesentlichen plus 75 Grad Celsius liegt, und wobei ferner vorzugsweise der Temperaturbereich von einem der magnetokalorischen Elemente eine untere Temperatur von im Wesentlichen minus 15 Grad Celsius aufweist und der Temperaturbereich von einem anderen der magnetokalorischen Elemente eine obere Temperatur von im Wesentlichen plus 80 Grad Celsius aufweist.

12. Vorrichtung nach einem der vorhergehenden Ansprüche, wobei die Vorrichtung ferner ein Mittel (106, 108, 110) zum Melken eines Tiers, beispielsweise einer Kuh, umfasst, wobei die Vorrichtung vorzugsweise ferner ein Mittel (43) zum Transportieren von Milch, die von einem Tier über das Melkmittel erhalten wird, von dem Melkmittel zu dem gekühlten Milchgroßtank umfasst, wobei vorzugsweise das Mittel zum Transportieren von Milch ein oder mehrere Rohre (43) umfasst, durch die der gekühlte Milchgroßtank mit dem Mittel zum Melken eines Tiers fluidverbunden ist.

13. Vorrichtung nach Anspruch 12, wobei das Mittel zum Melken eines Tiers automatisch gesteuert arbeitet, wobei das Mittel zum Melken eines Tiers vorzugsweise ein Robotermelkmittel (104) umfasst.

14. Vorrichtung nach einem der Ansprüche 1 bis 13, wobei der eine gekühlte Fluidgroßtank ein gekühlter Milchgroßtank ist, wobei vorzugsweise das Ventilelement des Vierwegeventils aus einem wärmeisolierenden Material gefertigt ist, wobei vorzugsweise das Ventilelement des Vierwegeventils aus einem massiven Abschnitt aus wärmeisolierendem Material gefertigt ist, durch das beabstandete Fluidströmungswege verlaufen.

15. Verfahren zum Kühlen oder Erwärmen von Tankfluid unter Verwendung einer Vorrichtung nach einem der Ansprüche 1 bis 14.

## Revendications

1. Appareil comprenant :
un réservoir à fluide en vrac réfrigéré (5) ;
un moyen de réfrigération (7) destiné à réfrigérer ou chauffer de manière sélective du fluide stocké dans ledit réservoir ; et
au moins un distributeur à quatre voies (88) en communication fluidique avec ledit moyen de réfrigération, ledit distributeur à quatre voies comprenant :
un premier orifice (89), un deuxième orifice (90), un troisième orifice (91) et un quatrième orifice (92) ; et
un élément de distributeur (93) mobile entre une première position et une seconde position, dans lequel, dans ladite première position, du fluide peut s'écouler le long d'une première voie d'écoulement (94) entre ledit premier orifice (89) et ledit deuxième orifice (90) et le long d'une deuxième voie d'écoulement (95) entre ledit troisième orifice (91) et ledit quatrième orifice (92), et dans lequel, dans ladite seconde position, du fluide peut s'écouler le long d'une troisième voie d'écoulement (96) entre ledit premier orifice (89) et ledit quatrième orifice (92) et le long d'une quatrième voie d'écoulement (97) entre ledit troisième orifice (91) et ledit deuxième orifice (90), **caractérisé en ce que** l'appareil comprend également un premier moyen de communication thermique (9) destiné à transporter de la chaleur entre du fluide stocké dans ledit réservoir (5) et ledit moyen de réfrigération (7), comportant un premier circuit de fluide en boucle fermée (13) s'étendant entre ledit réservoir (5) et ledit moyen de réfrigération (7), une première partie (31) dudit premier circuit (13) faisant partie d'un premier échangeur de chaleur (29) assurant une communication thermique entre du fluide stocké dans ledit réservoir (5) et du fluide dans ledit premier circuit de fluide (13) ; et
un second moyen de communication thermique (11) pour transporter de la chaleur entre ledit moyen de réfrigération (7) et provenant de fluide ambiant, comportant un second circuit de fluide en boucle fermée (15) s'étendant depuis ledit moyen de réfrigération (7), une première partie (35) dudit second circuit (15) faisant partie d'un deuxième échangeur de chaleur (33) assurant une communication thermique entre du fluide ambiant et du fluide dans ledit second circuit de fluide (15).

2. Appareil selon la revendication 1, comprenant un premier et un second distributeur à quatre voies (88a, 88b) en communication fluidique avec ledit moyen de réfrigération (7), lesdits distributeurs étant raccordés de manière fluidique dans ledit appareil pour assurer (i) le refroidissement de fluide dans ledit réservoir (5) au moyen dudit moyen de réfrigération quand lesdits éléments de distributeur (93) desdits distributeurs sont dans ladite première position, et (ii) le chauffage en cycle inversé de fluide dans ledit réservoir quand lesdits éléments de distributeur (93) desdits distributeurs sont dans ladite seconde position.

3. Appareil selon la revendication 1 ou la revendication 2, comprenant :
un premier et un second distributeur à quatre voies (88a, 88b) en communication fluidique avec lesdits premier et second circuits de fluide en boucle fermée (13, 15), de telle sorte que quand lesdits éléments de distributeur (93) desdits distributeurs (88a, 88b) sont (i) dans ladite première position, de la chaleur peut être transférée dudit fluide dans ledit réservoir (5) audit fluide ambiant au moyen dudit moyen de réfrigération (7), et (ii) quand lesdits éléments de distributeur (93) sont dans ladite seconde position, de la chaleur peut être transférée dudit fluide ambiant audit fluide dans ledit réservoir au moyen dudit moyen de réfrigération.

4. Appareil selon la revendication 3, dans lequel :
a) quand lesdits éléments de distributeur (93) desdits premier et second distributeurs à quatre voies (88a, 88b) sont dans ladite première position :
ledit fluide dans ledit premier circuit de fluide (13) peut s'écouler depuis ladite première partie (31) dudit circuit à travers ledit premier distributeur à quatre voies (88a) au moyen de ladite première voie d'écoulement (94), à travers ledit moyen de réfrigération (7), à travers ledit second distributeur (88b) au moyen de ladite première voie d'écoulement (94) et revenir à ladite première partie (31) dudit circuit de telle sorte que de la chaleur provenant de fluide dans ledit réservoir peut être transférée audit moyen de réfrigération ; et
ledit fluide dans ledit second circuit de fluide (11) peut s'écouler depuis ladite première partie (35) dudit second circuit (11) à travers ledit premier distributeur à quatre voies (88a) au moyen de ladite deuxième voie d'écoulement (95), à travers ledit moyen de réfrigération (7), à travers ledit second distributeur (88b) au moyen de ladite deuxième voie d'écoulement (94) et revenir à ladite première partie (35) dudit circuit de telle sorte que ladite chaleur provenant dudit moyen de réfrigération (7) peut être transférée audit fluide ambiant, ou
b) dans lequel, quand lesdits éléments de distributeur (93) desdits premier et second distributeurs à quatre voies (88a, 88b) sont dans ladite seconde position : ledit fluide dans ledit premier circuit de fluide (13) peut s'écouler depuis ladite première partie (31) dudit premier circuit (13), à travers ledit premier distributeur à quatre voies (88a) au moyen de ladite troisième voie d'écoulement (96), à travers ledit moyen de réfrigération (7), à travers ledit second distributeur (88b) au moyen de ladite quatrième voie d'écoulement (97) et revenir à ladite première partie (31) dudit premier circuit (13) de telle sorte que de la chaleur provenant dudit moyen de réfrigération (7) peut être transférée à du fluide dans ledit réservoir (5) ; et
ledit fluide dans ledit second circuit de fluide (11) peut s'écouler depuis ladite première partie (35) dudit second circuit (11) à travers ledit premier distributeur à quatre voies (88a) au moyen de ladite quatrième voie d'écoulement (97), à travers ledit moyen de réfrigération (7), à travers ledit second distributeur (88b) au moyen de ladite troisième voie d'écoulement (96) et revenir à ladite première partie (35) dudit second circuit de telle sorte que ladite chaleur provenant dudit fluide ambiant peut être transférée audit moyen de réfrigération.

5. Appareil selon la revendication 1, dans lequel ledit distributeur à quatre voies (88) est raccordé de manière fluidique dans ledit appareil de telle sorte que, quand ledit élément de distributeur (93) dudit distributeur à quatre voies (88) est dans ladite première position, du fluide dans ledit réservoir (5) est refroidi au moyen dudit moyen de réfrigération (7), et quand ledit élément de distributeur (93) dudit distributeur à quatre voies (88) est dans ladite seconde position, du fluide dans ledit réservoir (5) est refroidi au moyen de fluide ambiant.

6. Appareil selon la revendication 1 ou la revendication 5, comprenant :
un premier moyen de communication thermique (9) pour transporter de la chaleur provenant de fluide stocké dans ledit réservoir (5) audit moyen de réfrigération (7), comportant un premier circuit de fluide en boucle fermée (13) s'étendant entre ledit réservoir (3) et ledit moyen de réfrigération (7), une première partie (31) dudit premier circuit faisant partie d'un premier échangeur de chaleur (29) assurant une communication thermique entre du fluide stocké dans ledit réservoir (5) et du fluide dans ledit premier circuit de fluide (13) ;
un second moyen de communication thermique (11) pour transporter de la chaleur provenant dudit moyen de réfrigération (7) à du fluide ambiant, comportant un second circuit de fluide en boucle fermée (15) s'étendant depuis ledit moyen de réfrigération, une première partie (35) dudit second circuit (15) faisant partie d'un échangeur de chaleur (33) assurant une communication thermique entre du fluide ambiant et du fluide dans ledit second circuit de fluide (15) ; et
dans lequel ledit élément de distributeur (93) dudit distributeur à quatre voies (88), dans ladite première position, assure une communication thermique entre ledit réservoir et ledit moyen de réfrigération (7) et une communication thermique entre ledit moyen de réfrigération et ledit fluide ambiant, et dans lequel, quand ledit élément de distributeur (93) est dans ladite seconde position, ledit distributeur (88) coupe de manière sélective une communication thermique substantielle entre ledit réservoir (5) et ledit moyen de réfrigération et une communication thermique entre ledit moyen de réfrigération et ledit fluide ambiant et établit une communication thermique entre ledit réservoir (5) et ledit fluide ambiant, de préférence dans lequel ledit distributeur à quatre voies peut être exploité pour, quand ledit élément de distributeur (93) est dans ladite seconde position, placer lesdits premier et second circuits de fluide en communication fluidique l'un avec l'autre de manière à fournir un unique circuit en boucle fermée comprenant ladite première partie (31) dudit premier circuit (13) et ladite première partie (35) dudit second circuit (15).

7. Appareil selon la revendication 6, dans lequel, quand ledit élément de distributeur (93) dudit distributeur à quatre voies (88) est dans ladite première position :
ledit fluide dans ledit premier circuit de fluide (13) peut s'écouler depuis ladite première partie (31) dudit premier circuit (13) à travers ledit distributeur à quatre voies (88) au moyen de ladite première voie d'écoulement (94), à travers ledit moyen de réfrigération (7) et revenir à ladite première partie (31) dudit premier circuit (13) de telle sorte que de la chaleur provenant de fluide dans ledit réservoir peut être transférée audit moyen de réfrigération ; et
ledit fluide dans ledit second circuit de fluide (11) peut s'écouler depuis ladite première partie (35) dudit second circuit (11) à travers ledit distributeur à quatre voies (88) au moyen de ladite deuxième voie d'écoulement (95), à travers ledit moyen de réfrigération (7) et revenir à ladite première partie (35) dudit second circuit (13) de telle sorte que ladite chaleur provenant dudit moyen de réfrigération (7) peut être transférée audit fluide ambiant.

8. Appareil selon la revendication 6 ou la revendication 7, dans lequel, quand ledit élément de distributeur (93) dudit distributeur à quatre voies (88) est dans ladite seconde position :
ledit fluide dans ledit premier circuit de fluide (13) peut s'écouler depuis ladite première partie (31) dudit premier circuit (13) à travers ledit distributeur à quatre voies (88) au moyen de ladite troisième voie d'écoulement (96), à travers ledit moyen de réfrigération (7), à travers ladite première partie (35) dudit second circuit (11), à travers ledit distributeur à quatre voies (88) au moyen de ladite quatrième voie d'écoulement (97), à travers ledit moyen de réfrigération (7) et revenir à ladite première partie (31) dudit premier circuit (13) de telle sorte qu'un unique circuit en boucle fermée est défini et que ladite chaleur provenant de fluide dans ledit réservoir peut être transférée audit fluide ambiant.

9. Appareil selon l'une quelconque des revendications 3, 4 ou 6 à 8, dans lequel une seconde partie (21) du premier circuit (13) fait partie d'un troisième échangeur de chaleur (25) assurant une communication thermique entre du fluide dans le premier circuit de fluide (13) et ledit moyen de réfrigération (7), de préférence dans lequel une seconde partie (23) dudit second circuit (15) fait partie d'un quatrième échangeur de chaleur (27) assurant une communication thermique entre du fluide dans ledit second circuit de fluide (15) et ledit moyen de réfrigération, comprenant en outre plus préférablement un moyen de déplacement de fluide destiné à déplacer du fluide ambiant à travers ledit deuxième échangeur de chaleur (33), dans lequel ledit fluide ambiant est de préférence de l'air et ledit moyen de déplacement de fluide est de préférence un ventilateur (37), plus préférablement dans lequel ledit ou chaque circuit de fluide en boucle fermée (13, 15) comprend une pompe (17, 19) pour pomper du fluide à travers le ou chaque circuit de fluide en boucle fermée (13, 15), de préférence dans lequel ledit fluide dans ledit ou chaque circuit de fluide en boucle fermée (13, 15) est de l'eau, de préférence dans lequel ladite eau est mélangée à un agent antigel.

10. Appareil selon l'une quelconque des revendications précédentes, dans lequel ledit moyen de réfrigération (7) est un moyen de réfrigération magnétique comprenant une pompe à chaleur magnétique.

11. Appareil selon la revendication 10, dans lequel ledit moyen de réfrigération magnétique fonctionne sous commande automatique, de préférence dans lequel ledit moyen de réfrigération magnétique comprend au moins deux éléments magnétocaloriques (7), de préférence dans lequel le moyen de réfrigération magnétique comprend deux éléments magnétocaloriques ou plus, présentant différents points de Curie, chaque point de Curie étant compris entre essentiellement moins 10 degrés Celsius et essentiellement plus 70 degrés Celsius et étant de préférence compris entre moins 4 degrés Celsius et plus 57 degrés Celsius, plus préférablement dans lequel le moyen de réfrigération magnétique comprend des éléments magnétocaloriques présentant différents points de Curie, lesdits points de Curie étant moins 4 degrés Celsius, plus 4 degrés Celsius, plus 10 degrés Celsius, plus 17 degrés Celsius, plus 24 degrés Celsius, plus 34 degrés Celsius, plus 42 degrés Celsius, et plus 57 degrés Celsius, et de préférence dans lequel les éléments magnétocaloriques sont fabriqués à partir de l'un des alliages : (i) alliages de gadolinium ; (ii) alliages de La-Fe-Co-Si ; et (iii) alliages de Mn-Fe-P-As, plus préférablement dans lequel le moyen de réfrigération magnétique comprend deux éléments magnétocaloriques (7) ou plus, présentant une variation d'entropie produite par un changement de champ magnétique de 0,5 tesla, qui est supérieure à essentiellement 0,8 J/kg·K sur l'ensemble de différentes plages de température, ladite plage de température de chaque élément magnétocalorique étant dans la plage d'essentiellement moins 15 degrés Celsius et essentiellement plus 80 Celsius et de préférence dans la plage d'essentiellement moins 10 degrés Celsius et essentiellement plus 75 degrés Celsius, et de préférence encore dans lequel ladite plage de température de l'un des éléments magnétocaloriques présente une température inférieure d'essentiellement moins 15 degrés Celsius et ladite plage de température d'un autre des éléments magnétocaloriques présente une température supérieure d'essentiellement plus 80 degrés Celsius.

12. Appareil selon l'une quelconque des revendications précédentes, dans lequel l'appareil comprend en outre un moyen (106, 108, 110) destiné à traire un animal, tel qu'une vache, dans lequel de préférence l'appareil comprend en outre un moyen (43) destiné à transporter du lait, obtenu d'un animal par ledit moyen de traite, dudit moyen de traite audit réservoir à lait en vrac réfrigéré, de préférence dans lequel ledit moyen destiné à transporter du lait comprend une ou plusieurs conduites (43) par lesquelles le réservoir à lait en vrac réfrigéré communique de manière fluidique avec le moyen destiné à traire un animal.

13. Appareil selon la revendication 12, dans lequel le moyen destiné à traire un animal fonctionne sous commande automatique, de préférence dans lequel le moyen destiné à traire un animal comprend un moyen de traite robotique (104).

14. Appareil selon l'une quelconque des revendications 1 à 13, dans lequel ledit un réservoir à fluide en vrac réfrigéré est un réservoir à lait en vrac réfrigéré, de préférence dans lequel l'élément de distributeur du distributeur à quatre voies est fabriqué en un matériau d'isolation thermique, de préférence dans lequel l'élément de distributeur du distributeur à quatre voies est fabriqué en une portion massive de matériau d'isolation thermique, à travers laquelle s'étendent des voies d'écoulement de fluide espacées.

15. Procédé de réfrigération ou de chauffage de fluide en vrac au moyen d'un appareil selon l'une quelconque des revendications 1 à 14.
